(19) Europäisches Patentamt
European Patent Office
Office européen des brevets

(11) EP 3 040 350 A1

(12) EUROPEAN PATENT APPLICATION
published in accordance with Art. 153(4) EPC

(43) Date of publication:
06.07.2016 Bulletin 2016/27

(21) Application number: 14839384.6

(22) Date of filing: 27.08.2014

(51) Int Cl.:
*C08F 8/00* (2006.01) *C08J 5/18* (2006.01)

(86) International application number:
PCT/JP2014/072503

(87) International publication number:
WO 2015/030084 (05.03.2015 Gazette 2015/09)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 30.08.2013 JP 2013180429
04.03.2014 JP 2014041935

(71) Applicant: Kuraray Co., Ltd.
Okayama 710-0801 (JP)

(72) Inventors:
- KAMADA, Taisuke
Kurashiki-shi
Okayama 710-0801 (JP)
- FUJIWARA, Naoki
Kurashiki-shi
Okayama 710-0801 (JP)
- WAKUI, Takashi
Kurashiki-shi
Okayama 710-0801 (JP)

(74) Representative: Vossius & Partner
Patentanwälte Rechtsanwälte mbB
Siebertstrasse 3
81675 München (DE)

# (54) NOVEL VINYL ALCOHOL BASED COPOLYMER, PRODUCTION METHOD FOR SAME, AND ION EXCHANGE MEMBRANE

(57) Provided are a modified vinyl alcohol (VA) having a reduced water content to exhibit a practically-required form stability, a producing method for the same, and an ion exchange membrane. (1) A copolymer (P) including, as structural units, a vinyl alcohol monomer unit (A), a vinylene monomer unit (B), and a polymer unit (C) having a polar group other than a hydroxyl group. (2) A method for producing the copolymer (P) including: providing a copolymer (P') including a vinyl alcohol polymer unit (A') and a polymer unit (C) having a polar group other than a hydroxyl group, and heat-treating the copolymer (P') under an acidic condition to form a polyene structure by dehydration so as to introduce a vinylene monomer unit (B). (3) An ion-exchange membrane containing as a main component a copolymer (PA) in which the polymer unit (C) having a polar group other than a hydroxyl group is a polymer unit (CA) having an ionic group.

EP 3 040 350 A1

## Description

CROSS REFERENCE TO THE RELATED APPLICATION

This application is based on and claims Convention priority to Japanese Patent Application No. 2013-180429, filed August 30, 2013, and Japanese Patent Application No. 2014-041935, filed March 4, 2014, the entire disclosures of each of which are herein incorporated by reference as a part of this application.

FIELD OF THE INVENTION

The present invention relates to a copolymer (P) including, as structural units, a vinyl alcohol monomer unit (A), a vinylene monomer unit (B), and a polymer unit (C) having a polar group other than a hydroxyl group; to a method for producing the same; and to an ion-exchange membrane using the same.

BACKGROUND ART

Copolymers having polar groups are widely used as base materials or modifiers for various materials, for example, ion-exchange membranes, ion-exchange resins, ion-adsorbing materials, solid electrolytes for fuel cells, conductive polymer materials, antistatic materials, primary batteries, secondary batteries, solid electrolytic capacitors, inks, binders (adhesives), health care products such as pharmaceuticals and cosmetics, food additives, detergents and others.

In particular, copolymers used for applications such as ion exchange, ion adsorption, and ion selective permeation are generally used in forms such as a membrane, a particle and a fiber, in the presence of water or an organic solvent. For these applications, ion exchange resins of styrene-divinylbenzene type or fluorocarbon type are mainly used in a form of membrane (ion exchange membrane) in many cases.

It has been known that ion exchange membranes of styrene-divinylbenzene type are produced by allowing a styrene-divinylbenzene copolymer to be subjected to post-modification treatment to introduce an anionic group such as sulfonic acid group or a cationic group such as a quaternary ammonium group into the styrene-divinylbenzene copolymer (Patent Documents 1 and 2).

As for ion exchange fluorocarbon resins, a perfluoroalkyl sulfonic acid polymer in which a sulfonic acid group is bonded to a side chain of a perfluoro backbone has been used (Patent Document 3).

There has been recently reported as a noteworthy material a polyvinyl alcohol copolymer that has good ion exchange capacity, good ion adsorption capacity, good ion selective permeability, as well as has high resistance to organic fouling, high processability, and cost reduction potential (Patent Documents 4 and 5).

RELATED ART DOCUMENTS

PATENT DOCUMENTS

[Patent Document 1] JP Laid-open Patent Publication No. 2008-266443
[Patent Document 2] JP Laid-open Patent Publication No. 2008-285665
[Patent Document 3] JP Laid-open Patent Publication No. 2005-78895
[Patent Document 3] JP Patent No. 4776683
[Patent Document 4] International Publication No. WO2010 / 110333 A1

SUMMARY OF THE INVENTION

PROBLEMS TO BE SOLVED BY THE INVENTION

The styrene-divinylbenzene ion exchange membranes have problems that the styrene-divinylbenzene polymer has poor processability, so that a predetermined shape should be imparted by using a base material during polymerization. The styrene-divinylbenzene ion exchange membranes also have problems that production costs are increased due to post-modification treatment.

The fluorocarbon ion exchange membranes have problems that production process of the polymer is complicated as well as that significant cost reduction is impossible due to usage of carbon fluoride materials.

As for the ion-exchange membranes of polyvinyl alcohol copolymer, the ion-exchange membranes using substrates of hydrophilic polyvinyl alcohol essentially require insolubilization treatment. The insolubilization treatment is

generally carried out with a bifunctional crosslinking agent such as glutaraldehyde to crosslink hydroxyl groups, as well as with a hydroxyl group-modifier such as formaldehyde. Thus-obtained insolubilized polyvinyl alcohol membrane, however, still may have high water content and poor dimensional stability. Accordingly, further improvement is desired.

In order to reduce water content of the vinyl alcohol copolymer applicable for ion exchange membranes and others so as to exhibit a practically-required form stability, the inventors of the present invention set an object to provide a modified vinyl alcohol copolymer as well as to provide an ion exchange membrane obtained from the modified vinyl alcohol copolymer.

MEANS FOR SOLVING THE PROBLEMS

The inventors of the present invention made an intensive study to achieve the above object and have found that reduction in water content of a vinyl alcohol copolymer can be achieved by introduction of a vinylene monomer unit into the vinyl alcohol copolymer, and that the vinylene monomer unit can be simply introduced by carrying out a heat treatment of the vinyl alcohol copolymer.

A first aspect of the present invention is a copolymer (P) including, as structural units, a vinyl alcohol monomer unit (A), a vinylene monomer unit (B), and a polymer unit (C) having a polar group other than a hydroxyl group.

The copolymer (P) may be a copolymer (P1) represented by the following general formula (1).

[Chem. 1]

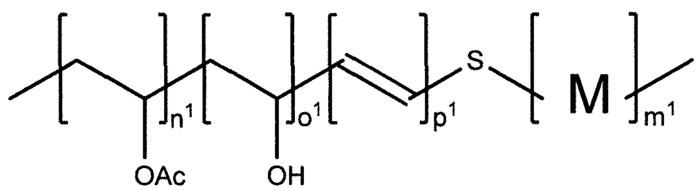

(1)

In the formula, $0.5000 \leq (o^1 + p^1) / (n^1 + o^1 + p^1) \leq 0.9999$; $0.100 \leq p^1 / (n^1 + o^1 + p^1) \leq 0.999$; $0.01 \leq m^1 / (m^1 + n^1 + o^1 + p^1) \leq 0.50$; and M is a monomer unit having a polar group other than a hydroxyl group.

The copolymer (P) may be a copolymer (P2) represented by the following general formula (2).

[Chem. 2]

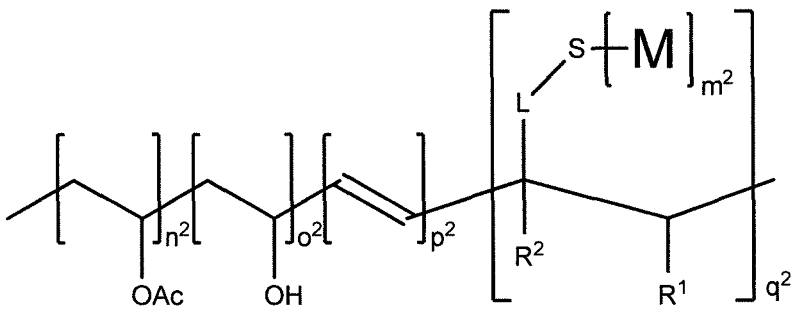

(2)

In the formula, $0.5000 \leq (o^2 + p^2) / (n^2 + o^2 + p^2) \leq 0.9999$; $0.100 \leq p^2 / (n^2 + o^2 + p^2) \leq 0.999$; $0.001 \leq q^2 / (n^2 + o^2 + p^2 + q^2) \leq 0.050$; $0.01 \leq q^2 \times m^2 / (q^2 \times m^2 + n^2 + o^2 + p^2) \leq 0.50$; $R^1$ is a hydrogen atom or a carboxyl group; $R^2$ is a hydrogen atom, a methyl group, a carboxyl group or a carboxymethyl group; L is a divalent aliphatic $C_{1-20}$ hydrocarbon group which may contain a nitrogen atom and/or an oxygen atom, where $R^1$ is a carboxyl group or $R^2$ is a carboxyl group or a carboxymethyl group, L may form a ring with an adjacent hydroxyl group; and M is a monomer unit having a polar group other than a hydroxyl group.

The polymer unit (C) having a polar group other than a hydroxyl group may be a polymer unit (CA) having an ionic group (an ionic group-containing polymer unit). The ionic group may be an anionic group or may be a cationic group.

The monomer unit M having a polar group may be preferably represented by any one of the following general formulae (3), (4), and (5).

[Chem. 3]

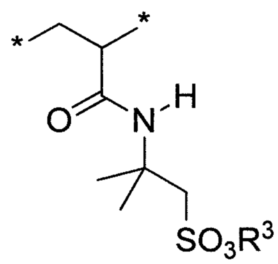

(3)

In the formula, $R^3$ is a hydrogen atom or an alkali metal atom.

[Chem. 4]

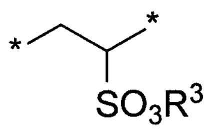

(4)

In the formula, $R^3$ has the same meaning as defined above.

[Chem. 5]

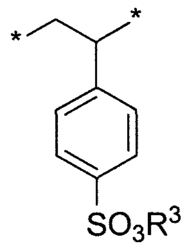

(5)

In the formula, $R^3$ has the same meaning as defined above.

The copolymer (P) may have an acetal-modified site introduced by monoaldehyde treatment or a crosslinked site introduced by dialdehyde treatment.

A second aspect of the present invention is a method for producing a copolymer (P) comprising:

providing a copolymer (P') (precursor) including a vinyl alcohol polymer unit (A') and a polymer unit (C) having a polar group other than a hydroxyl group,

heat-treating the copolymer (P') under an acidic condition to form a polyene structure by dehydration so as to introduce a vinylene monomer unit (B).

A third aspect of the present invention is an ion-exchange membrane containing as a main component a copolymer (PA) that includes, as structural units, a vinyl alcohol monomer unit (A), a vinylene monomer unit (B), and a polymer unit (CA) having an ionic group, i.e., the polymer unit (C) having a polar group other than a hydroxyl group is a polymer unit (CA) having an ionic group.

Preferably, the copolymer (PA) has a crosslinked structure.

The ion exchange membrane may contain a reinforcing material.

Preferably, the reinforcing material may be a support having a continuous structure, the support comprises a porous membrane, a mesh, or a nonwoven fabric.

Preferably, the nonwoven fabric may be a wet-laid nonwoven fabric of polyvinyl alcohol cut fibers.

A fourth aspect of the present invention is a method for producing an ion-exchange membrane comprising:

providing a membrane-shaped body that includes, as a main component, a copolymer (P") including a vinyl alcohol polymer unit (A') and a polymer unit (CA) having an ionic group, and
heat-treating the membrane-shaped body under an acidic condition to introduce a polyene structure by dehydration so as to obtain a copolymer (PA) including, as structural units, a vinyl alcohol monomer unit (A), a vinylene monomer unit (B), and a polymer unit (CA) having an ionic group.

It should be noted that any combination of at least two constructions, disclosed in the appended claims and/or the specification should be construed as included within the scope of the present invention. In particular, any combination of two or more of the appended claims should be equally construed as included within the scope of the present invention.

EFFECT OF THE INVENTION

The copolymer (P) according to the first aspect of the present invention can be obtained from a copolymer as a precursor (a precursor before heating treatment) of the copolymer (P). Since the precursor copolymer can be obtained as an aqueous copolymer solution, the precursor copolymer is excellent in processability, and easily capable of imparting various forms to the copolymer (P). The heat treatment of the precursor polymer can introduce a vinylene monomer unit into the precursor polymer to obtain the copolymer (P) that achieves reduction in water content and has water resistance imparted thereto. Accordingly, by using this copolymer, it is possible to provide a copolymer that can be used for producing a material in which swelling caused by water embracement can be reduced, dimensional stability can be improved, and ion exchange capacity, ion adsorption capacity, and ion selective permeability can be enhanced.
According to the production method related to the second aspect of the present invention for producing a copolymer, by heat-treating under an acidic condition a copolymer containing a vinyl alcohol polymer unit (A') and a polymer unit (C) having a polar group other than a hydroxyl group, it is possible to form a polyene structure by dehydration so as to introduce a vinylene monomer unit (B) into the copolymer, so as to produce a copolymer (P) according to the present invention.
The ion exchange membrane according to the third aspect of the present invention formed from the copolymer (P) can achieve reduction in water content and have water resistance imparted thereto due to introduction of a vinylene monomer unit. Accordingly, it is possible to obtain an ion exchange membrane in which swelling caused by water embracement can be reduced, and dimensional stability can be improved.
According to the production method related to the fourth aspect of the present invention for producing an ion-exchange membrane, by simply heat-treating under an acidic condition a membrane-shaped composition containing as a main component a copolymer (P') that contains a vinyl alcohol polymer unit (A') and a polymer unit (C) having an ionic group, it is possible to form a polyene structure by dehydration so as to produce an ion exchange membrane containing as a main component a copolymer (P) including, as structural units, a vinyl alcohol monomer unit (A), a vinylene monomer unit (B), and a polymer unit (C) having an ionic group.

BRIEF DESCRIPTION OF THE DRAWINGS

The present invention will be more clearly understood from the preferred embodiments described below with reference to the attached drawings. However, the embodiments and the drawings are merely illustrative and explanatory, and should not be used for defining the scope according to the present invention. The scope according to the present invention is defined by the attached claims.

Fig. 1 is a schematic sectional view for illustrating a device for measuring dynamic transport number of an ion exchange membrane; and
Fig. 2 is a schematic sectional view for illustrating a device for measuring membrane resistance of an ion exchange membrane.

DESCRIPTION OF EMBODIMENTS

Copolymer

Hereinafter, an embodiment of the present invention will be described in detail. The copolymer according to the present invention includes, as a main component, a copolymer (P) containing, as structural units, a vinyl alcohol monomer unit (A), a vinylene monomer unit (B), and a polymer unit (C) having a polar group other than a hydroxyl group.
As the preferable structure of the copolymer (P), there may be exemplified a block copolymer represented by the above general formula (1) or a graft copolymer represented by the above general formula (2).
In the general formula (1), the ratio $(o^1 + p^1) / (n^1 + o^1 + p^1)$ denotes a mole fraction ratio corresponding to units

other than the vinyl acetate unit with respect to the vinyl alcohol monomer unit (A) and the vinylene monomer unit (B). The lower limit of the ratio may be 0.5000 or more, more preferably 0.7000 or more, and even more preferably 0.8000 or more. In the meantime, the upper limit of the ratio may be preferably 0.9999, more preferably 0.999 or less, and still more preferably 0.995 or less.

Where the lower limit of the ratio is too small, namely, the saponification degree is too low, there is a tendency that the performance of the membrane such as membrane resistance is deteriorated arising from the influence of too-low water content. In the meantime, where the upper limit of the ratio is over 0.9999, there is a production difficulty.

In the general formula (1), the ratio $p^1 / (n^1 + o^1 + p^1)$ denotes a mole fraction ratio corresponding to the vinylene monomer unit (B) with respect to the vinyl alcohol monomer unit (A) and the vinylene monomer unit (B), and can be regarded as a polyenization ratio (ratio of polyene fractions). The lower limit of the polyenization ratio may be 0.100 or more, more preferably 0.250 or more, and still more preferably 0.500 or more. In the meantime, the upper limit of the polyenization ratio may be preferably 0.999 or less, more preferably 0.99 or less, and still more preferably 0.95 or less.

There is a production difficulty to increase the upper limit of the polyenization ratio over 0.999. Where the lower limit of the polyenization ratio is too low, the obtained membrane may have difficulty in exhibiting water resistance.

In the general formula (1), the ratio $m^1 / (m^1 + n^1 + o^1 + p^1)$ denotes a mole fraction ratio corresponding to the polymer unit (C) having a polar group other than a hydroxyl group with respect to the vinyl alcohol monomer unit (A), the vinylene monomer unit (B), and the polymer unit (C). The lower limit of the ratio may be 0.01 or more, more preferably 0.03 or more, and still more preferably 0.5 or more. In the meantime, the upper limit of the ratio may be 0.50 or less, more preferably 0.30 or less, and still more preferably 0.25 or less.

Where the lower limit of the ratio is too low, it may be difficult to exhibit sufficient property for ion exchange membrane because of deficiency in ion path formation. Where the upper limit of the ratio is too high, there is a tendency that shape-retaining property is insufficient.

In the general formula (2), the ratio $(o^2 + p^2) / (n^2 + o^2 + p^2)$ denotes a mole fraction ratio corresponding to units other than the vinyl acetate unit with respect to the vinyl alcohol monomer unit (A) and the vinylene monomer unit (B). The lower limit of the ratio may be 0.5000 or more, more preferably 0.7000 or more, and even more preferably 0.8000 or more. In the meantime, the upper limit of the ratio may be preferably 0.9999, more preferably 0.999 or less, and still more preferably 0.995 or less.

Where the lower limit of the ratio is too small, namely, the saponification degree is too low, there is a tendency that the performance of the membrane such as membrane resistance is deteriorated because of the action such as too low water content. Where the upper limit of the ratio is over 0.9999, there is a production difficulty.

In the general formula (2), the ratio $p^2 / (n^2 + o^2 + p^2)$ denotes a mole fraction ratio corresponding to the vinylene monomer unit (B) with respect to the vinyl alcohol monomer unit (A) and the vinylene monomer unit (B), and can be regarded as a polyenization ratio. The lower limit of the polyenization ratio may be 0.100 or more, more preferably 0.250 or more, and still more preferably 0.500 or more. In the meantime, the upper limit of the polyenization ratio may be preferably 0.999 or less, more preferably 0.99 or less, and still more preferably 0.95 or less.

There is a production difficulty to increase the upper limit of the polyenization ratio over 0.999. Where the lower limit of the polyenization ratio is too low, the obtained membrane may have difficulty in exhibiting water resistance.

In the general formula (2), the ratio $q^2 / (n^2 + o^2 + p^2 + q^2)$ denotes a mole fraction ratio corresponding to the unit having a branch structure in the copolymer (P2). The lower limit of the ratio may be preferably 0.001 or more, more preferably 0.002 or more, and still more preferably 0.003 or more. In the meantime, the upper limit of the ratio may be preferably is 0.050 or less, more preferably 0.02 or less, and still more preferably 0.01 or less.

In the general formula (2), the ratio $q^2 \times m^2 / (q^2 \times m^2 + n^2 + o^2 + p^2)$ denotes a mole fraction ratio corresponding to the polymer unit (C) having a polar group other than a hydroxyl group with respect to the vinyl alcohol monomer unit (A), the vinylene monomer unit (B), and the polymer unit (C). The lower limit of the ratio may be 0.01 or more, more preferably 0.03 or more, and still more preferably 0.5 or more. In the meantime, the upper limit of the ratio may be 0.50 or less, more preferably 0.30 or less, and still more preferably 0.25 or less.

Where the lower limit of the ratio is too low, it may be difficult to exhibit sufficient property for ion exchange membrane because of deficiency in ion path formation. Where the upper limit of the ratio is too high, there is a tendency that shape-retaining property is insufficient.

It should be noted that the above general formulae (1) and (2) do not mean the specific locations of the repeating units represented by $n^1$, $o^1$, $p^1$, $n^2$, $o^2$, $p^2$, and $q^2$ as shown in these formulae, but just mean the existence of the repeating units in the formulae. The repeating units may be typically placed at random. A single type of repeating unit may be consecutively connected.

L may be any divalent aliphatic $C_{1-20}$ hydrocarbon group that may contain a nitrogen atom and/or an oxygen atom, and is not particularly limited to a specific one. The number of nitrogen atoms as well as oxygen atoms contained in L is not particularly limited. The aliphatic hydrocarbon group may be linear, branched, or cyclic, and preferably linear or branched. Where the aliphatic hydrocarbon group is branched, the number of carbon atoms in the sites branched from a main chain of the aliphatic hydrocarbon group (a chain containing consecutively-connected carbon atoms between

a sulfur atom and a nitrogen atom) is preferably 1 to 5. Examples of L containing a nitrogen atom and/or an oxygen atom may include an aliphatic hydrocarbon group in which the aliphatic hydrocarbon group contains a nitrogen atom and/or an oxygen atom inserted into the aliphatic hydrocarbon group as a carbonyl bond (-CO-), an ether bond (-O-), an amino bond [-NR- (R is a hydrogen atom or a group containing a carbon atom bonding to the nitrogen atom "N")], an amide bond (-CONH-), or the like; an aliphatic hydrocarbon group in which the aliphatic hydrocarbon group contains a nitrogen atom and/or an oxygen atom replaced with at least a part of the aliphatic hydrocarbon group as a carboxyl group (-COOH), a hydroxyl group (-OH) or the like; and others. In view of availability of raw materials and easy synthesis, L is preferably a linear or branched alkylene group having 1 to 20 carbon atoms in total which may have a carboxyl group, and more preferably a linear or branched alkylene group having 2 to 15 carbon atoms in total which may have a carboxyl group, and still more preferably a linear or branched alkylene group having 2 to 10 carbon atoms in total which may have a carboxyl group.

Examples of the polar group other than a hydroxyl group may include a monovalent substituent group such as $-NH_2$, -NHR, -SH, -CN, and -N=C=O; a divalent substituent group such as -NR-, -S-, -O-, -C(=O)-, -C(=S)-, -C(=NR)-, -S(=O)-, $-S(=O)_2-$, -P(OR)-, -P(=O)OR-, -N=CH-, and -N=N-. These substituent groups may be bonded to each other, or may form a ring structure in combination, for example, may be an amide group represented by -CONH-, an ester group represented by -COO-, a carbonate group represented by -OC(=O)-O-, a ureido group represented by -NR-C(=O)-NR-, a thioureido group represented by -NR-C(=S)-NR-, an amide oxime group represented by -C(=N-OH)-, and the like.

An embodiment exemplified as a polar group other than a hydroxyl group may include an ionic group. The ionic group may include an anionic group and a cationic group.

Examples of the anionic groups may include a sulfonic acid group, a phosphoric acid group, a carboxylic acid group, a boronic acid group, a sulfonyl imide group, and others. The species of counter cation for the anionic group is not particularly limited to a specific one, and may be preferably a monovalent cation such as an alkali metal ion, $H^+$, and a quaternary ammonium ion.

As a cationic group that is an embodiment of the polar group other than a hydroxyl group, there may be mentioned an amino group such as an unsubstituted amino group, an N-alkylamino group, and an N-dialkylamino group; a nitrogen-containing heterocyclic ring such as a pyridyl group and an imidazolyl group; a quaternary ammonium group such as an N-trialkyl ammonium group, an N-alkylpyridinium group, an N-alkylimidazolium group, a thiouronium group, and an isothiouronium group. The species of counter anions for the quaternary ammonium group is not particularly limited to a specific one, and may be preferably a monovalent anion, for example, a halogenated anion of a Group 5B element such as $PF_6^-$, $SbF_6^-$, $AsF_6^-$; a halogenated anion of a Group 3B element such as $BF_4^-$; a halogen anion such as $I^-$ ($I_3^-$), $Br^-$, and $Cl^-$; a halogenic acid anion such as $ClO_4^-$; a metal halide anion such as $AlCl_4^-$, $FeCl4^-$, and $SnCl_5$, a nitrate anion indicated by $NO_3^-$; an organic sulfonic acid anion such as p-toluene sulfonic acid anion, a naphthalene sulfonic acid anion, $CH_3SO_3^-$, and $CF_3SO_3^-$; a carboxylic acid anion such as $CF_3COO^-$ and $C_6H_5COO^-$; $OH^-$; and other monovalent anions.

As a monomer capable of forming a structural unit M having a polar group other than a hydroxyl group, there may mentioned a structural unit copolymerizable with any one of the polar groups and derived from one or more ethylenically unsaturated monomers. Examples of ethylenically unsaturated monomers may include α-olefins such as ethylene, propylene, n-butene, and isobutylene; styrenes such as styrene and α-methylstyrene; acrylic acids or acrylic acid esters such as acrylic acid, methyl acrylate, ethyl acrylate, n-propyl acrylate, i-propyl acrylate, n-butyl acrylate, i-butyl acrylate, and t-butyl acrylate; methacrylic acids or methacrylic acid esters such as methacrylic acid, methyl methacrylate, ethyl methacrylate, n-propyl methacrylate, i-propyl methacrylate, n-butyl methacrylate, i-butyl methacrylate, and t-butyl methacrylate; acrylamides such as acrylamide, N-methylacrylamide, N-ethylacrylamide, N,N-dimethylacrylamide, diacetoneacrylamide; methacrylamides such as methacrylamide, N-methylmethacrylamide, N-ethylmethacrylamide, methacrylamidopropyldimethylamine; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane; allyl compounds such as allyl acetate, 2,3-diacetoxy-1-allyloxypropane, and allyl chloride; unsaturated dicarboxylic acids and esters thereof such as maleic acid, itaconic acid, and fumaric acid; and others.

Examples of the monomer units M having a polar group other than a hydroxyl group may include monomers represented by the following general formula (6) to (26), and others.

[Chem. 6]

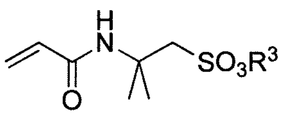

(6)

In the formula, $R^3$ is a hydrogen atom or an alkali metal atom.

[Chem. 7]

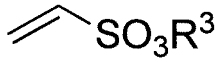

(7)

In the formula, $R^3$ has the same meaning as defined above.

[Chem. 8]

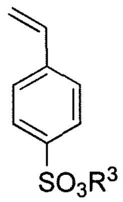

(8)

In the formula, $R^3$ has the same meaning as defined above.

[Chem. 9]

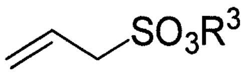

(9)

In the formula, $R^3$ has the same meaning as defined above.

[Chem. 10]

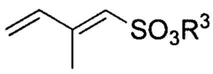

(10)

In the formula, $R^3$ has the same meaning as defined above.

[Chem. 11]

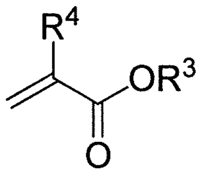

(11)

In the formula, $R^3$ has the same meaning as defined above; $R^4$ is a hydrogen atom or a methyl group.

[Chem. 12]

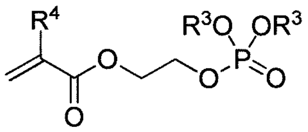

(12)

In the formula, $R^3$ and $R^4$ have the same meaning as defined above.

[Chem. 13]

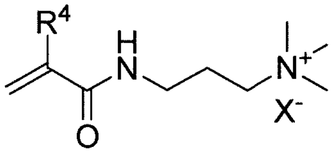

(13)

In the formula, $X^-$ is a monovalent anion, for example, a halogenated anion of a Group 5B element such as $PF_6^-$, $SbF_6^-$, $AsF_6^-$; a halogenated anion of a Group 3B element such as $BF_4^-$; a halogen anion such as $I^-$ ($I_3^-$), $Br^-$, and $Cl^-$; a halogenic acid anion such as $ClO_4^-$; a metal halide anion such as $AlCl_4^-$, $FeCl_4^-$, and $SnCl_5^-$, a nitrate anion indicated by $NO_3^-$; an organic sulfonic acid anion such as p-toluene sulfonic acid anion, a naphthalene sulfonic acid anion, $CH_3SO_3^-$, and $CF_3SO_3^-$; a carboxylic acid anion such as $CF_3COO$- and $C_6H_5COO^-$; a monovalent anion such as $OH^-$; and others. $R^4$ has the same meaning as defined above.

[Chem. 14]

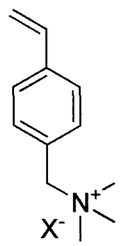

(14)

In the formula, $X^-$ has the same meaning as defined above.

[Chem. 15]

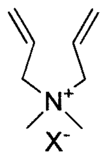

(15)

In the formula, $X^-$ has the same meaning as defined above.

[Chem. 16]

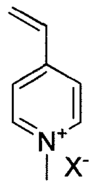

(16)

In the formula, $X^-$ has the same meaning as defined above.

[Chem. 17]

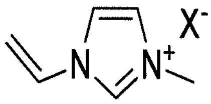

(17)

In the formula, $X^-$ has the same meaning as defined above.

[Chem. 18]

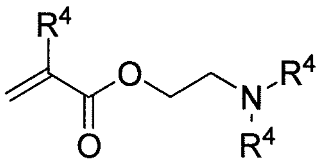

(18)

In the formula, $R^4$ has the same meaning as defined above, and may be same or different from each other.

[Chem. 19]

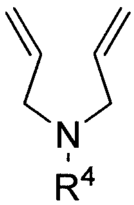

(19)

In the formula, $R^4$ has the same meaning as defined above.

[Chem. 20]

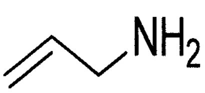

(20)

[Chem. 21]

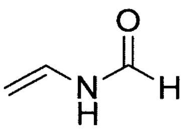

(21)

[Chem. 22]

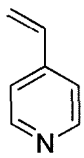

(22)

[Chem. 23]

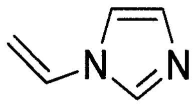

(23)

[Chem. 24]

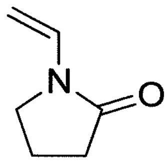

(24)

[Chem. 25]

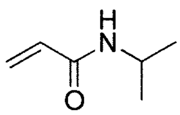

(25)

[Chem. 26]

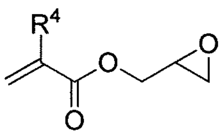

(26)

In the formula, $R^4$ has the same meaning as defined above.

Production Method of Copolymer (P)

The method for producing a formed body (formed article) comprising a copolymer (P) according to the present invention can usually include:

(I) preparing an intermediate material (precursor) containing a copolymer (P') that contains a vinyl alcohol polymer unit (A') and a polymer unit (C) having a polar group other than a hydroxyl group;
(II) producing a formed body by imparting a desired form to the intermediate material; and
(III) forming a polyene structure by dehydration so as to produce a copolymer (P) according to the present invention.
The above processes (I) and (III) are necessary for producing the copolymer (P).

The process (I) may be either a process (Ia) producing a vinyl alcohol polymer, followed by allowing vinyl alcohol polymer to be bound to a polar group other than a hydroxyl group so as to a desired intermediate material containing a

copolymer (P'); or a process (Ib) producing an intermediate material containing a copolymer (P') that comprises a vinyl alcohol polymer unit (A') and at least one monomer unit having a polar group other than a hydroxyl group.

The process (Ia) preferably includes a method for producing an intermediate material by allowing the vinyl alcohol polymer to be reacted with one or more hydroxyl group-modifying agents (such as a butyraldehyde sulfonic acid or an alkali metal salt thereof, a benzaldehyde sulfonic acid or an alkali metal salt thereof, and a cationic ammonium aldehyde) to introduce a polar group other than the hydroxyl group. The process (Ib) preferably includes a method for producing an intermediate material by radical-polymerizing at least one monomer containing a polar group other than hydroxyl group in the presence of a vinyl alcohol polymer containing a mercapto group, from the viewpoint of industrial feasibility. The process (Ib) is particularly preferable because of easy control for the species and amount of components.

The preferred structure of the copolymer (P') may include a block copolymer (P1') represented by the following general formula (27) and a graft copolymer (P2') represented by the following general formula (28).

[Chem. 27]

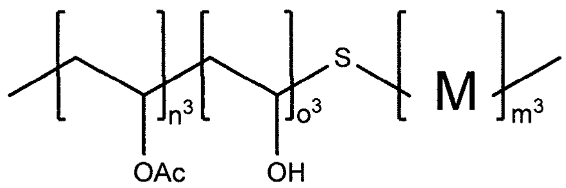

(27)

In the formula, $0.5000 \le o^3 / (n^3 + o^3) \le 0.9999$; $0.01 \le m^3 / (m^3 + n^3 + o^3) \le 0.50$; M has the same meaning as defined above.

[Chem. 28]

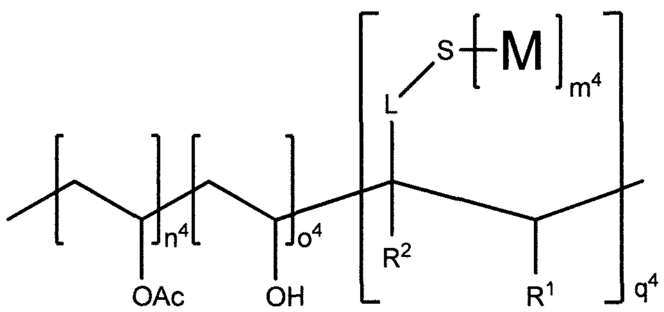

(28)

In the formula, $0.5000 \le o^4 / (n^4 + o^4) \le 0.9999$; $0.001 \le q^4 / (n^4 + o^4 + q^4) \le 0.05$; $0.01 \le q^4 \times m^4 / (q^4 \times m^4 + n^4 + o^4) \le 0.50$; $R^1$, $R^2$, L, and M have the same meaning as defined above.

The member $o^3 / (n^3 + o^3)$ in the general formula (27) means a ratio of the vinyl alcohol unit contained in the vinyl alcohol polymer unit (A'). The lower limit is 0.5000 or more, more preferably 0.7000 or more, and even more preferably 0.8000 or more. In the meantime, the upper limit is preferably 0.9999, more preferably 0.999 or less, and still more preferably 0.995 or less.

The dehydration and formation of polyene fractions can convert the vinyl alcohol polymer unit (A') into a polymer unit containing a vinyl alcohol monomer unit (A) and a vinylene monomer unit (B). Where a block copolymer (P1') represented by the general formula (27) is used as an intermediate material, the member $o^3 / (n^3 + o^3)$ in the general formula (27) is equivalent to the member $(o^1 + p^1) / (n^1 + o^1 + p^1)$ in the general formula (1).

The member $m^3 / (m^3 + n^3 + o^3)$ in the general formula (27) shows a ratio of a polymer unit (C) containing an ionic group with respect to the vinyl alcohol polymer unit (A') and the polymer unit having an ionic group (C). The lower limit is 0.01 or more, more preferably 0.03 or more, and still more preferably 0.5 or more. In the meantime, the upper limit is 0.50 or less, more preferably 0.30 or less, and still more preferably 0.25 or less.

The dehydration and formation of polyene fractions can convert the vinyl alcohol polymer unit (A') into a polymer unit containing a vinyl alcohol monomer unit (A) and a vinylene monomer unit (B). Where a block copolymer (P1') represented by the general formula (27) is used as an intermediate material, the member $m^3 / (m^3 + n^3 + o^3)$ in the general formula (27) is equivalent to the member $m^1 / (m^1 + n^1 + o^1 + p^1)$ in the general formula (1).

The member $o^4 / (n^4 + o^4)$ in the general formula (28) means a ratio of the vinyl alcohol unit contained in the

vinyl alcohol polymer unit (A'). The lower limit is 0.5000 or more, more preferably 0.7000 or more, and even more preferably 0.8000 or more. In the meantime, the upper limit is preferably 0.9999, more preferably 0.999 or less, and still more preferably 0.995 or less.

The dehydration and formation of polyene fractions can convert the vinyl alcohol polymer unit (A') into a polymer unit containing a vinyl alcohol monomer unit (A) and a vinylene monomer unit (B). Where a block copolymer (P2') represented by the general formula (28) is used as an intermediate material, the member $o^4 / (n^4 + o^4)$ in the general formula (28) is equivalent to the member $(o^2 + p^2) / (n^2 + o^2 + p^2)$ in the general formula (2).

The member $q^4 / (n^4 + o^4 + p^4 + q^4)$ in the general formula (28) shows a ratio of a unit having a branched structure in the copolymer (P2'). The lower limit is preferably 0.001 or more, more preferably 0.002 or more, and still more preferably 0.003 or more. In the meantime, the upper limit is preferably 0.050 or less, more preferably 0.02 or less, and still more preferably 0.01 or less.

The member $q^4 \times m^4 / (q^4 \times m^4 + o^4 + n^4)$ in the general formula (28) shows a ratio of a polymer unit (C) having an ionic group with respect to the vinyl alcohol polymer unit (A') and the polymer unit (C) having an ionic group. The lower limit is 0.01 or more, more preferably 0.03 or more, and still more preferably 0.5 or more. In the meantime, the upper limit is 0.50 or less, more preferably 0.30 or less, and still more preferably 0.25 or less.

The dehydration and formation of polyene fractions can convert the vinyl alcohol polymer unit (A') into a polymer unit containing a vinyl alcohol monomer unit (A) and a vinylene monomer unit (B). Where a block copolymer (P2') represented by the general formula (28) is used as an intermediate material, the member $q^4 \times m4 / (q^4 \times m^4 + o^4 + n^4)$ in the general formula (28) is equivalent to the member $(q^2 \times m2) / (q^2 \times m^2 + n^2 + o^2 + p^2)$ in the general formula (2).

It should be noted that the above general formulae (27) and (28) do not mean the specific locations of the repeating units represented by $n^3$, $n^4$, $o^3$, $o^4$ and $q^4$ as shown in these formulae, but just mean the existence of the repeating units in the formulae. In general, each of the repeating units may locate at random. A single type of repeating unit may be consecutively connected.

As a method for producing the copolymer (P1'), there may be mentioned a method comprising polymerizing a monomer having a polar group other than a hydroxyl group in the presence of a terminal mercapto group-containing vinyl alcohol polymer as recited in, for example, Patent Document 4 and Patent Document 5.

The content of vinyl alcohol units in the terminal mercapto group-containing vinyl alcohol polymer (i.e., saponification degree of terminal mercapto group-containing vinyl alcohol polymer) is not particularly limited to a specific one. The content of the vinyl alcohol units may be preferably 50% by mole or higher, more preferably 70% by mole or higher, and still more preferably 80% by mole or higher based on 100% by mole of all the structural units in the polymer. As for an upper limit, the content of the vinyl alcohol units may be preferably 99.99% by mole or lower, more preferably 99.9% by mole or lower, and still more preferably 99.5% by mole or lower based on 100% by mole of all the structural units in the polymer.

Although there is no particular limitation, the terminal mercapto group-containing vinyl alcohol polymer may have a viscosity-average polymerization degree measured according to JIS K6726 of preferably 100 to 5,000, and more preferably 200 to 4,000. Where the viscosity-average polymerization degree is lower than 100, the mechanical strength of the derived copolymer may be reduced. Where the viscosity-average polymerization degree exceeds 5,000, the vinyl alcohol polymer may have difficulty in industrial production.

As a method for producing the copolymer (P2'), there may be mentioned a method comprising polymerizing a monomer having a polar group other than a hydroxyl group in the presence of a side-chain mercapto group-containing vinyl alcohol polymer represented by the following general formula (30) that comprises a structural unit represented by the following general formula (29) and a vinyl alcohol structural unit, as recited in, for example, Patent Document 4 and Patent Document 5.

[Chem. 29]

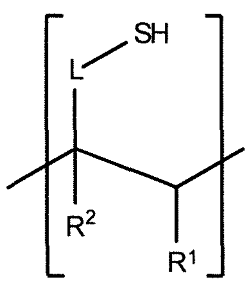

(29)

In the formula, $R^1$ and $R^2$ have the same meaning as defined above.

[Chem. 30]

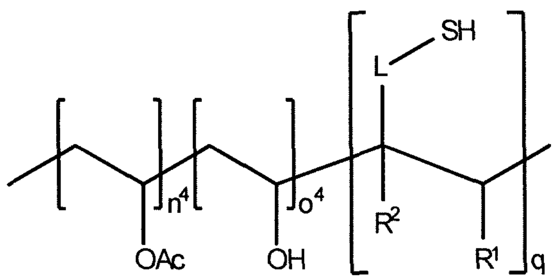

(30)

In the formula, $n^4$, $o^4$, q, L, $R^1$ and $R^2$ have the same meaning as defined above.

The structural unit represented by the general formula (29) can be derived from an unsaturated monomer convertible to the structural unit, preferably from a thioester monomer having an unsaturated double bond represented by the following formula (31).

[Chem. 31]

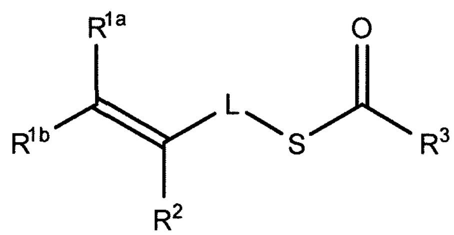

(31)

In the formula, $R^{1a}$ and $R^{1b}$ is independently a hydrogen atom or a carboxyl group, wherein at least one of $R^{1a}$ and $R^{1b}$ is a hydrogen atom; $R^3$ is a methyl group, or forms a cyclic structure by covalently bonding to a specific carbon atom contained in L; $R^2$ and L have the same meaning as defined above.

The thioester monomer having an unsaturated double bond represented by the general formula (31) may be prepared according to a known method.

Preferred examples of the thioester monomer having an unsaturated double bond represented by the general formula (31) may include, for example, thioacetic acid S-(3-methyl-3-buten-1-yl) ester, thioacetic acid S-17-octadecen-1-yl ester, thioacetic acid S-15-hexadecen-1-yl ester, thioacetic acid S-14-pentadecen-1-yl ester, thioacetic acid S-13-tetradecen-1-yl ester, thioacetic acid S-12-tridecen-1-yl ester, thioacetic acid S-11-dodecen-1-yl ester, thioacetic acid S-10-undecen-1-yl ester, thioacetic acid S-9-decen-1-yl ester, thioacetic acid S-8-nonen-1-yl ester, thioacetic acid S-7-octen-1-yl ester, thioacetic acid S-6-hepten-1-yl ester, thioacetic acid S-5-hexen-1-yl ester, thioacetic acid S-4-penten-1-yl ester, thioacetic acid S-3-buten-1-yl ester, thioacetic acid S-2-propen-1-yl ester, thioacetic acid S-[1-(2-propen-1-yl)hexyl]ester, thioacetic acid S-(2,3-dimethyl-3-buten-1-yl) ester, thioacetic acid S-(1-ethenylbutyl) ester, thioacetic acid S-(2-hydroxy-5-hexen-1-yl) ester, thioacetic acid S-(2-hydroxy-3-buten-1-yl) ester, thioacetic acid S-(1,1-dimethyl-2-propen-1-yl) ester, 2-[(acetylthio)methyl]-4-pentenoic acid, thioacetic acid S-(2-methyl-2-propen-1-yl) ester, thioesters represented by the following formulae from (b-1) to (b-30), and others.

[Chem. 32]

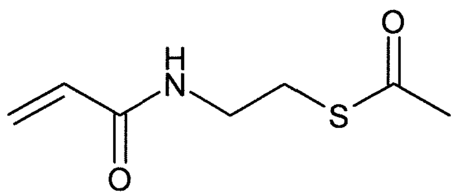

(b-1)

[Chem. 33]

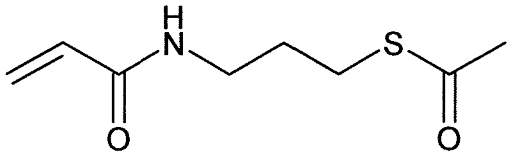

(b-2)

[Chem. 34]

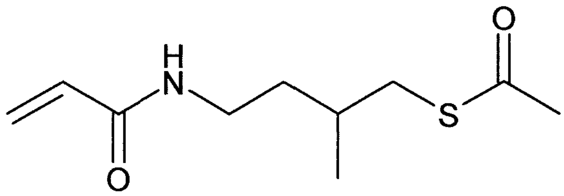

(b-3)

[Chem. 35]

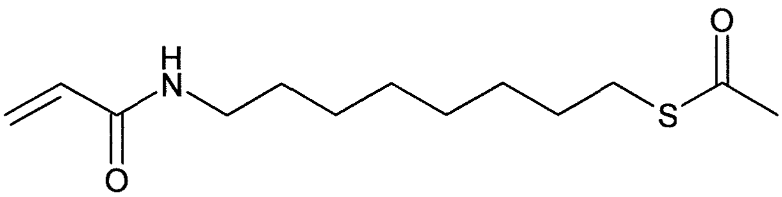

(b-4)

[Chem. 36]

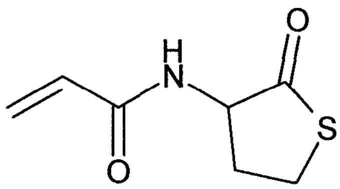

(b-5)

[Chem. 37]

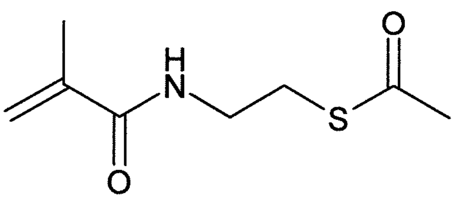

(b-6)

[Chem. 38]

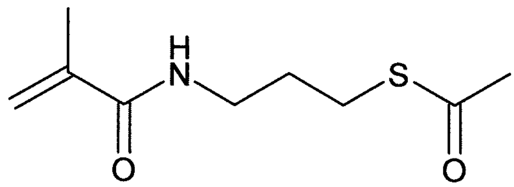

(b-7)

[Chem. 39]

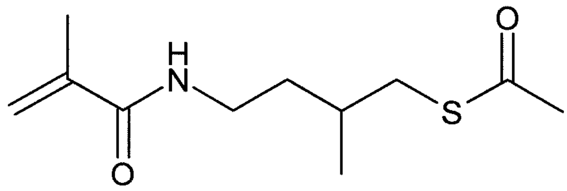

(b-8)

[Chem. 40]

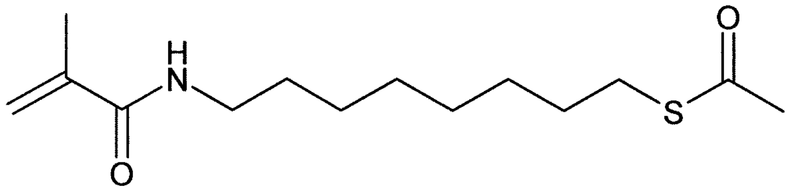

(b-9)

[Chem. 41]

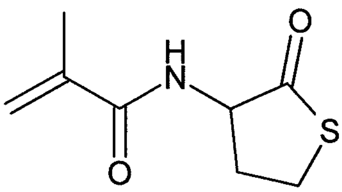

(b-10)

[Chem. 42]

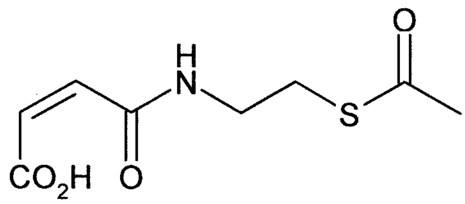

(b-11)

[Chem. 43]

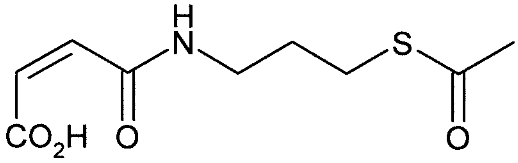

(b-12)

[Chem. 44]

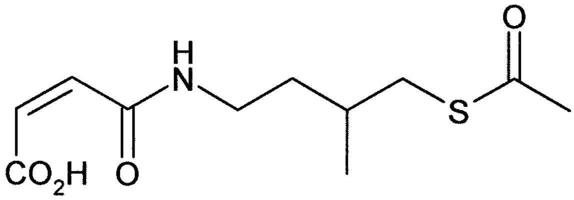

(b-13)

[Chem. 45]

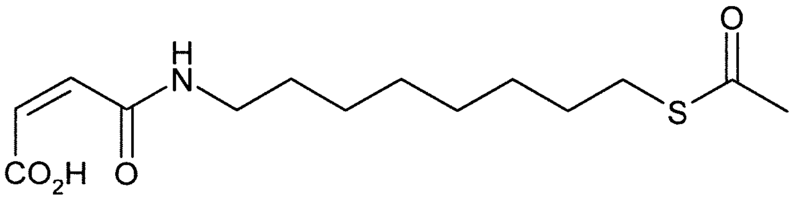

(b-14)

[Chem. 46]

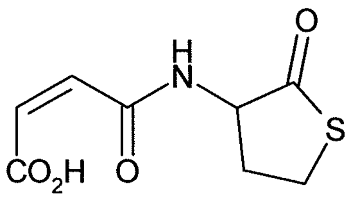

(b-15)

[Chem. 47]

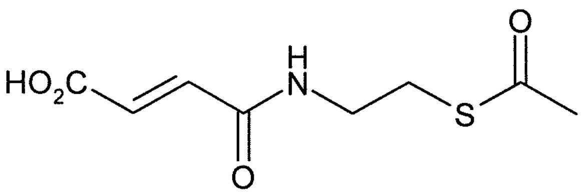

(b-16)

[Chem. 48]

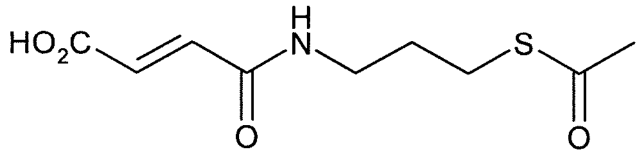

(b-17)

[Chem. 49]

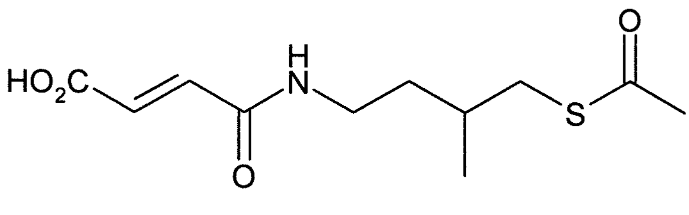

(b-18)

[Chem. 50]

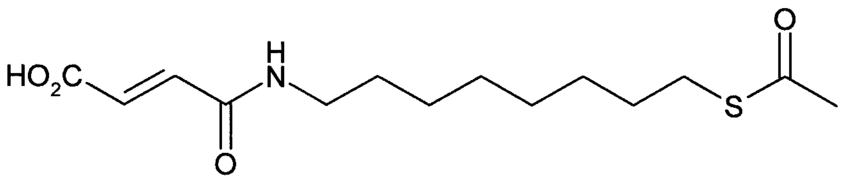

(b-19)

[Chem. 51]

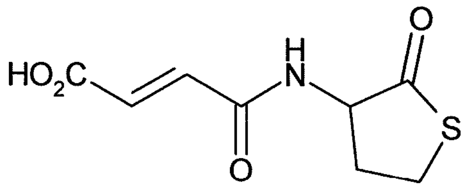

(b-20)

[Chem. 52]

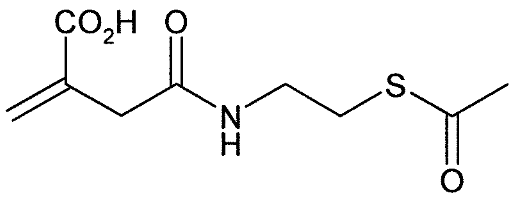

(b-21)

[Chem. 53]

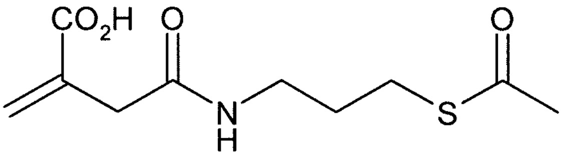

(b-22)

[Chem. 54]

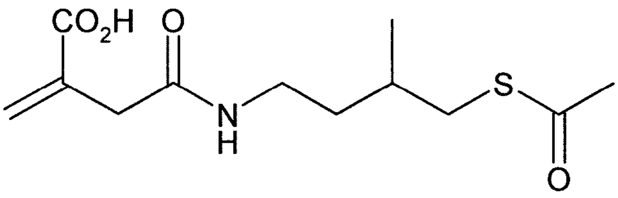

(b-23)

[Chem. 55]

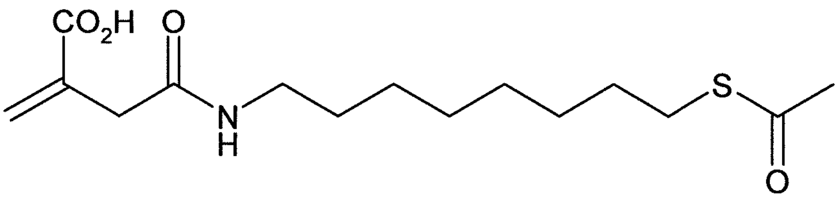

(b-24)

[Chem. 56]

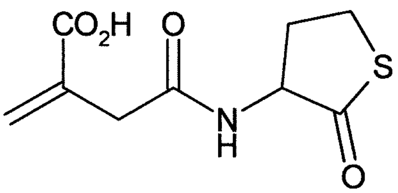

(b-25)

[Chem. 57]

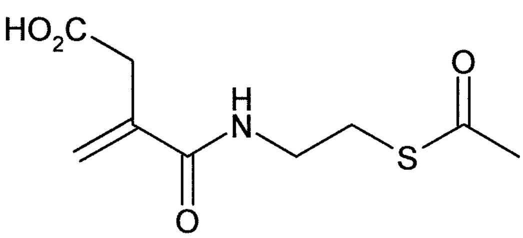

(b-26)

[Chem. 58]

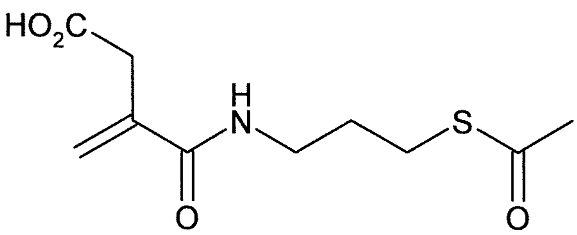

(b-27)

[Chem. 59]

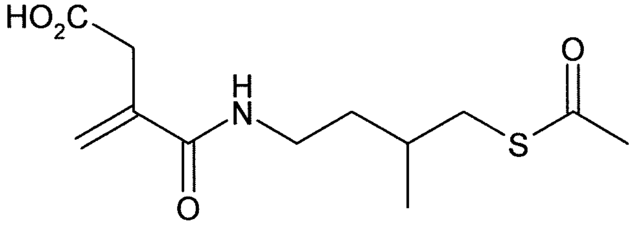

(b-28)

[Chem. 60]

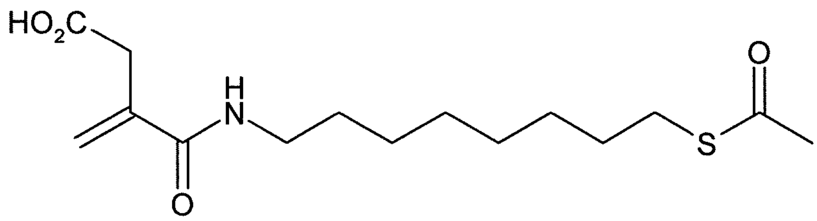

(b-29)

[Chem. 61]

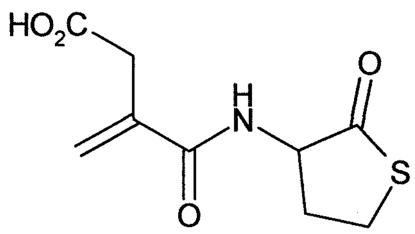

(b-30)

Among the above-mentioned compound group, from the viewpoint of availability of raw materials and facilitation of synthesis, thioacetic acid S-7-octen-1-yl ester, and the thioester monomers each represented by (b-6), (b-7), (b-9), (b-10), (b-11), (b-12), (b-14), (b-15), (b-16), (b-17), (b-19), (b-20), (b-21), (b-22), (b-24), (b-25), (b-26), (b-27), (b-29) and (b-30) are preferred.

In the side chain-mercapto group-containing polyvinyl alcohol polymer represented by the general formula (30), the content of the structural unit represented by the general formula (29) is not particularly limited. The content of the structural unit represented by the general formula (29) may be preferably from 0.1 to 5% by mole, more preferably from 0.2 to 2% by mole, and still more preferably from 0.3 to 1% by mole based on 100% by mole of all the structural units in the polymer.

The side-chain mercapto group-containing vinyl alcohol polymer represented by the general formula (30) can contain one or more structural units of the general formula (29). Where having a plurality of structural units, it is preferable that the total content of the two or more structural units is in the above range.

The content of vinyl alcohol units in the side-chain mercapto group-containing vinyl alcohol polymer represented

by the general formula (30) (i.e., saponification degree of side-chain mercapto group-containing vinyl alcohol polymer) is not particularly limited to a specific one. The content of the vinyl alcohol units may be preferably 50% by mole or higher, more preferably 70% by mole or higher, and still more preferably 80% by mole or higher based on 100% by mole of all the structural units in the polymer. As for an upper limit, the content of the vinyl alcohol units may be preferably 99.99% by mole or lower, more preferably 99.9% by mole or lower, and still more preferably 99.5% by mole or lower based on 100% by mole of all the structural units in the polymer.

The vinyl alcohol units in the side-chain mercapto group-containing polyvinyl alcohol polymer represented by the general formula (30) can be derived from the vinyl ester unit by a reaction such as hydrolysis and alcoholysis. The species of vinyl esters as a vinyl ester unit is not particularly limited to a specific one, and vinyl acetate is preferable from the industrial point of view.

As far as the effects of the present invention can be achieved, the side-chain mercapto group-containing polyvinyl alcohol polymer represented by the general formula (30) may contain an additional structural unit in addition to the structural unit represented by the general formula (29), the vinyl alcohol unit, and the vinyl ester unit. The additional structural unit is, for example, a structural unit derived from an unsaturated monomer that is copolymerizable with the vinyl ester and convertible to the structural unit represented by the general formula (29); and a structural unit derived from an ethylenically unsaturated monomer that is copolymerizable with the vinyl ester. The ethylenically unsaturated monomer has the same meaning as defined above.

In the side-chain mercapto group-containing polyvinyl alcohol polymer represented by the general formula (30), there is no particular restriction with respect to the arrangement order of the structural units, for example, the unit represented by the general formula (29), the vinyl alcohol unit, and any other structural unit, and these units may be arranged as a random structure, a block structure, an alternating structure or other structures.

Although there is no particular limitation, the side-chain mercapto group-containing vinyl alcohol polymer represented by the general formula (30) may have a viscosity-average polymerization degree measured according to JIS K6726 of preferably 100 to 5,000, and more preferably 200 to 4,000. Where the viscosity-average polymerization degree is lower than 100, the mechanical strength of the copolymer may be reduced. The vinyl alcohol polymer having a viscosity-average polymerization degree exceeding 5,000 may have difficulty in industrial production.

The method for producing a side-chain mercapto group-containing vinyl alcohol polymer represented by the general formula (30) is not particularly limited as long as the side-chain mercapto group-containing vinyl alcohol polymer of interest can be produced. For example, such a method comprises:

copolymerizing (i) vinyl esters with (ii) unsaturated monomers copolymerizable with the vinyl esters and convertible into the structural units represented by the general formula (29); and
converting the vinyl ester units into vinyl alcohol units by solvolysis, while converting the units derived from the unsaturated monomers (ii) into structural units represented by the general formula (29) by solvolysis.

In particular, from the view point of simplicity, a preferable method comprises: copolymerizing vinyl esters and thioester monomers having unsaturated double bonds represented by the general formula (31) [hereinafter referred to as thioester monomer (31)]; and subjecting ester bonds of the vinyl ester units and thioester bonds in the structural units of the thioester monomers (31) to hydrolysis or alcoholysis reaction. Hereinafter, this method is described in detail.

Copolymerization of vinyl esters with thioester monomers (31) may be carried out by employing methods and conditions known for homopolymerization of vinyl esters.

It should be noted that during copolymerization other copolymerizable monomers may be further copolymerized with vinyl esters and thioester monomers (31). Examples of such copolymerizable monomers may be the same as the ethylenically unsaturated monomers described above.

In the obtained copolymer, ester bonds of the vinyl ester units and thioester bonds of the structural units derived from the thioester monomers (31) are hydrolyzable or alcoholyzable at the substantially same conditions with each other. Accordingly, hydrolysis or alcoholysis of the ester bonds and the thioester bonds can be carried out by using the methods and conditions known in the art for saponification of vinyl ester homopolymer.

The form of an intermediate material containing a copolymer (P') is not particularly limited to a specific one. In consideration of processability in the process (II), the form may be preferably a solution. The kind of a solvent used for the solution is not particularly limited to a specific one. There may be exemplified polar solvents such as water, methanol, ethanol, isopropanol, diethyl ether, tetrahydrofuran, 1,4-dioxane, acetone, methyl ethyl ketone, N-methyl pyrrolidone, N,N-dimethylformamide, dimethyl sulfoxide, methyl ethyl sulfoxide, and diethyl sulfoxide; mixed solvents thereof. In view of solubility, preferable solvents include water. The concentration of the solution is not particularly limited to a specific one, and may be 0.1 to 50 parts by mass, and more preferably from 5 to 30 parts by mass based on 100 parts by mass of the solvent mentioned above.

If necessary, the intermediate material containing a copolymer (P') may contain optional additives, in addition to a copolymer and a solvent. The order of adding procedure also can be arbitrarily selected. The additives can be

appropriately selected from such known additives, for example, metal fine particles, inorganic fine particles, inorganic salts, ultraviolet absorbing agents, antioxidants, anti-degradation agents, dispersants, surfactants, polymerization inhibitors, thickeners, conductive auxiliary agents, surface modifiers, preservatives, antifungal agents, antibacterial agents, antifoamers, and plasticizers. These additives may be used singly or in combination of two or more.

Into the intermediate material containing a copolymer (P'), may be added, if necessary, a polyvinyl alcohol in addition to the copolymer and a solvent, in order to improve strength of a formed copolymer product. Although there is not particularly limitation, the polyvinyl alcohol to be added may have a viscosity average polymerization degree measured according to JIS K6726 of preferably 500 to 8,000, and more preferably 1,000 to 7,000.

0170 The solution of the intermediate material (intermediate solution) containing a copolymer (P') may preferably have a pH pf less than 3.0, and more preferably a pH of less than 2.0 in order to facilitate the introduction of the vinylene monomer units in the process (III). The method for adjusting pH is not particularly limited to a specific one. The pH may be adjusted by appropriately adding an acidic compound such as sulfuric acid, hydrochloric acid, acetic acid, and ammonium chloride or a basic compound such as sodium hydroxide, potassium hydroxide, ammonia, and sodium acetate; by using an ion exchange resin such as anion exchange resin or cation exchange resin; or by carrying out an electrodialysis method.

0171 The process (II) is a step for producing a formed body by imparting a desired form to the intermediate material obtained in the process (I). The formed body may have a shape such as a particulate, a fiber, and a membrane.

0172 The method for producing a particle (particulate body) of polyvinyl alcohol is not particularly limited. There may be mentioned a known method comprising: adding a solution containing an intermediate material obtained in the process (I) dropwise into a solidifying solution to form a particulate body recited in JP Patent No. 3763904, and others.

0173 The method for producing a fiber (fibrous body) of polyvinyl alcohol is not particularly limited. There may be mentioned a method for forming a fibrous body by heating a polymer to be plasticized, a method of dry spinning a concentrated aqueous solution (Japan Examined Patent Publication No. 43-8992), a method of wet spinning a spinning dope into a dehydrative aqueous salt solution such as an aqueous sodium sulfate solution (Japan Laid-open Patent Publication 62-215011), a method of dry-wet spinning an organic solvent solution of PVA into a methanol having one carbon atom as a coagulating solvent (Japan Laid-open Patent Publication 1-229805), and others. Thus obtained fibrous body may have a structure such as a fiber having a modified cross-section, a fiber having a hollow cross-section, and a conjugated fiber, or may be processed into a fibrous aggregate such as a textile or a knitted body or a non-woven fabric.

A method of molding or forming a membrane-shaped body of vinyl alcohol polymer is not limited to a specific one. Examples of molding methods may include a melt-molding by heating and plasticizing a vinyl alcohol polymer (for example, extrusion molding method, injection molding method, inflation molding method, press molding method, and blow molding method); a solvent-cast molding method (solution-cast method) that is carried out by allowing a solution to be cast to form a membrane-shaped material and drying the cast material to remove the solvent contained in the solution; and others. These molding methods make it possible to obtain a molded article having a desired shape such as a tube and a bottle as well as a membrane-shaped body such as a film and a sheet.

In the melt-molding method, if necessary, any additional thermoplastic polymer can be added, and the order of addition can be arbitrarily selected. The species of the thermoplastic polymer is not particularly limited, and may be a thermoplastic polymer for general purpose.

The solution-cast method may be carried out by using a casting machine, a film applicator, and the like, but is not limited to the above machines. The cast solution may be cast onto a polymer film such as a polyethylene terephthalate film, a nylon film, and a polypropylene film, onto a metal foil such as a copper foil and an aluminum foil, or onto an inorganic substrate such as a glass substrate and a silicon substrate. The cast film may be in a multi-layer structure; alternatively may be combined as a composite into a porous material such as a porous film, a mesh, a non-woven fabric, a porous ceramics and a zeolite; or alternatively may be coated onto a surface of a three-dimensional article from a material such as a polymer, a metal, a ceramics, and a glass.

In the process (II), reinforcement may be carried out in combination with the process described above by additionally using a reinforcing material made of an inorganic material, an organic material, or an organic-inorganic hybrid material. The reinforcing material may be a fibrous material, a particulate material, or a flake form material. The reinforcing material may be a continuous support such as a porous membrane, a mesh, and a nonwoven fabric. In an embodiment using a reinforcing material, reinforcement with the additional reinforcing material makes it possible to improve mechanical strength and dimensional stability of the formed article. In particular, high reinforcing effect can be achieved by using the fibrous material or the above-mentioned continuous support as the reinforcing material. It is also preferable to laminate an un-reinforced layer and a reinforced layer obtained in the way as described above in an appropriate way to form a multi-layer structure. The reinforcing material may be added into a vinyl alcohol polymer and mixed during a process for forming a membrane-shaped body. Alternatively, the reinforcing material may be impregnated into a solution containing a polyvinyl alcohol polymer. Alternatively, the reinforcing material may be laminated to a film after film formation procedure.

The non-woven fabric may be preferably a wet-laid nonwoven fabric, which is formed from cut fibers (fiber

length: 1 to 30 mm). The wet-laid nonwoven fabric can be produced by dispersing subject fibers and a small amount of binder fibers for binding the subject fibers in water under gentle stirring to obtain a uniform slurry, and forming a sheet from the slurry by using a paper-making machine having at least one type of wire such as a cylindrical net, a Fourdrinier net, and an inclined wire.

The polymer used for forming the non-woven fabric (or the constituent polymers of the subject fibers) is not particularly limited to a specific one, and may include, for example, polyesters (a PET, a PTT, etc.), a polyvinyl alcohol, and others. The particularly preferable polymer may include a polyvinyl alcohol. As the particularly preferable non-woven fabrics, there may be exemplified a wet-laid nonwoven fabric containing polyvinyl alcohol cut fibers as subject fibers.

The polyvinyl alcohol fibers used as the subject fibers, i.e., the polyvinyl alcohol subject fibers, may be preferably not dissolved in water having a temperature of 90°C or lower, and may have a saponification degree of 99.9% by mole or higher. The polyvinyl alcohol subject fibers may be preferably acetalized. The degree of acetalization is preferably 15 to 40% by mole, and more preferably 25 to 35% by mole. The polymerization degree of the polyvinyl alcohol for constituting any type of the fibers may be preferably 1,000 to 2,500. The method for producing polyvinyl alcohol fibers used in the present invention can be a known method, and may be any one of a wet spinning, a dry-wet spinning, and a dry spinning. The polyvinyl alcohol subject fibers used in the present invention may have a fineness of 0.3 to 10 dtex, and more preferably 0.5 to 5 dtex for use as a material for a wet-laid nonwoven fabric.

The inorganic materials used as the reinforcing materials are not particularly limited as long as they have reinforcing effect. Examples of the inorganic reinforcing materials may include, for example, glass fibers, carbon fibers, cellulose fibers, kaolin clay, kaolinite, halloysite, pyrophyllite, talc, montmorillonite, sericite, mica, amesite, bentonite, asbestos, zeolite, calcium carbonate, calcium silicate, diatomaceous earth, silica sand, iron ferrite, aluminum hydroxide, aluminum oxide, magnesium oxide, titanium oxide, zirconium oxide, graphite, fullerene, carbon nanotube, and carbon nanohorn, and other inorganic reinforcing materials. The organic materials used as the reinforcing material are not also particularly limited as long as they have reinforcing effect. Examples of the organic reinforcing materials may include, for example, a polyvinyl alcohol, a polyphenylene sulfide, a polyphenylene ether, a polysulfone, a polyether sulfone, a polyether ether sulfone, a polyether ketone, a polyether ether ketone, a polythioether sulfone, a polythioether ether sulfone, a polythioether ketone, a polythioether ether ketone, a polybenzimidazole, a polybenzoxazole, a polyoxadiazole, a polybenzoxazinone, a polyxylylene, a polyphenylene, a polythiophene, a polypyrrole, a polyaniline, a polyacene, a polycyanogen, a polynaphthyridine, a polyphenylene sulfide sulfone, a polyphenylene sulfone, a polyimide, a polyetherimide, a polyesterimide, a polyamideimide, a polyamide, an aromatic polyamide, a polystyrene, an acrylonitrile-styrene polymer, a polystyrene-hydrogenated polybutadiene-polystyrene block copolymer, an acrylonitrile-butadiene-styrene resin, a polyester, a polyarylate, a liquid crystal polyester, a polycarbonate, a polytetrafluoroethylene, a polyvinylidene fluoride, a polyvinyl chloride, a polyvinylidene chloride, vinylon fibers, a methacrylic resin, an epoxy resin, a phenolic resin, a melamine resin, a urethane resin, a cellulose, a polyketone, a polyacetal, a polypropylene and a polyethylene, and the other organic reinforcing materials. The organic-inorganic hybrid materials also can be used as a reinforcing material, for example, an organic silicon polymer compound having a silsesquioxane or siloxane structure, such as a POSS (Polyhedral Oligomeric SilSesquioxanes) or a silicone rubber.

The process (III) is a process for producing a copolymer (P) including, as structural units, a vinyl alcohol monomer unit (A), a vinylene monomer unit (B), and a polymer unit (C) having a polar group other than a hydroxyl group by dehydrating the precursor obtained in the process (II) including the vinyl alcohol polymer unit (A') and the polymer unit having a polar group other than a hydroxyl group, preferably dehydrating a formed body including the precursor. The form or shape of the copolymer is not particularly limited to a specific one, and may be, for example, an article having a shape such as a particle, a film, and a fiber, with retaining the shape of the formed body obtained in the process (II), or an article having a shape formed by post-processing of the formed body in the process (II).

Where producing an ion-exchange membrane, the process (III) is a process for producing an ion-exchange membrane comprising, as a main component, a copolymer (P) that includes, as structural units, a vinyl alcohol monomer unit (A), a vinylene monomer unit (B), and a polymer unit (C) having an ionic group by carrying out dehydration and formation of polyene fractions of the precursor including the vinyl alcohol polymer unit (A') and the polymer unit having a polar group other than a hydroxyl group obtained in the process (II), preferably carrying out dehydration and formation of polyene fractions of a membrane article including the precursor as a main component.

The dehydration and formation of polyene fractions can be carried out by heat treatment. The type of heat treatment can be adjusted depending on the species and form of the polymer-formed body. The heat treatment can be carried out by a generally known method, for example, with a heating machine such as a hot air dryer, a hot pressing machine, a hot plate, an infrared heater, and a roller heater. A subject to be heat-treated having a larger area may be preferably heat-treated with a planar heater, more preferably with a hot pressing machine, a hot plate, an infrared heater, a roller heater, and the like. The heat treatment condition is not particularly limited to a specific one, and may be performed in an atmospheric air or in an atmosphere of an inert gas such as nitrogen, and/or under a normal pressure or a reduced pressure, and/or at a heating temperature of preferably 100 to 250°C, and more preferably 140 to 200°C, and/or in a heating period of preferably 5 seconds to 4 hours, more preferably from 1 minute to 2 hours. The heat treatment may

be carried out at one time or in a plurality of times.

If necessary, the copolymer (P) obtained in the process (III) may be subjected to crosslinking treatment. The crosslinking treatment makes it possible to enhance the water resistance. The crosslinking treatment is not particularly limited to a specific one, and can be carried out by any method as long as the method is capable of forming chemical bonding between molecular chains of polymers. In general, the crosslinking treatment can be performed by immersion in a solution containing a crosslinking treatment agent. Examples of agents for crosslinking treatment may include formaldehyde, or dialdehyde compounds such as glyoxal and glutaraldehyde.

According to the present invention, a crosslinking treatment can be carried out, for example, by mixing a crosslinking agent during the process (II) for producing a membrane-shaped body, and carrying out the heat treatment and the crosslinking treatment at the same time during the process (III); alternatively a crosslinking treatment can be carried out after the heat treatment by immersing a heat-treated material in a solution containing a dialdehyde compound in a solvent such as water, an alcohol, or a mixed solvent thereof under an acidic condition to be crosslinked. In consideration of processability, it is preferable to perform the latter method. In the latter method, the concentration of the crosslinking agent is usually from 0.001 to 10% by volume based on the solution.

EXAMPLES

Hereinafter, the present invention will be demonstrated by way of some Examples that are presented only for the sake of illustration, which are not to be construed as limiting the scope of the present invention.

Measurement of Polyenization Ratio

After applying an aqueous solution containing a sample copolymer onto a mold form, excess amount of the solution and air bubbles were removed. Then the applied solution was dried using a hot air dryer for 30 minutes at 80°C. The material dried using a hot air dryer for 30 minutes at 80°C was weighed so as to be determined as "a weight before polyene formation". Thereafter, the dried material was further heat-treated under the conditions of 160°C for 30 minutes using a machine for high-temperature heat treatment. The heat-treated material weighed so as to be determined as "a weight after polyene formation". The polyenization ratio is determined as a conversion ratio that is caused by weight reduction of the material where all of the weight reduction ("a weight before polyene formation" - "a weight after polyene formation") is attributed to conversion of vinyl alcohol monomer units (44.05 g/mol) contained in the copolymer into vinylene polymer unit (26.04 g/mol) by heat treatment to be dehydrated. It should be noted that where the subject to be weighed contains a reinforcing material, the weight of the sample copolymer is determined as a weight calculated by removing the reinforcing material weight from the total weight of the membrane.

From the measurement of the polyenization ratio, it is possible to determine $n^1$, $n^2$; $o^1$, $o^2$; $p^1$, $p^2$; and $m^1$, $q^2$ in the structure of the copolymer represented by the general formula (1) or (2) as follows:

$n^1$, $n^2$: it is considered that without being affected by polyene reduction, acetic acid groups in the starting material (before polyenization) remain as they are in the block copolymer PVA or graft copolymer of PVA.

$o^1$, $o^2$: these are calculated from a saponification degree and a ratio of PVA / modified monomer (e.g., monomer having an ionic group) used for producing a copolymer relative to a sample dry weight of a vinyl alcohol polymer units [$o^3$, $o^4$ in the formula (27) or (28) in the starting material (before polyenization)].

$p^1$, $p^2$: since the vinyl alcohol polymer units (A') [$o^3$, $o^4$ in the formula (27) or (28) in the starting material (before polyenization)] is converted into $o^1 + p^1$ or $o^2 + p^2$ in the formula (1) or (2) due to weight reduction caused by polyenization (formation of polyene fractions), the polyenization ratio can be calculated from the following formula:

$$\Delta W / (W - Wr - Wm - Wq)$$

$$= \left( \begin{array}{l} \text{Weight reduction} \\ \text{caused by formation of} \\ \text{polyene fractions} \end{array} \right) / \left( \begin{array}{l} \text{Weight of monomer units } o^3 \text{ or } o^4 \text{ and} \\ \text{weight of monomer units } n^3 \text{ or } n^4 \end{array} \right)$$

$$= Rp \times (44.05-26.04) / \{(1 - Rs) \times 86.09 + Rs \times 44.05\}$$

$\Delta W$: weight loss (measured value);

W: dry weight (measured value);

Wr: reinforcing material weight (measured value);

Wm: weight of a polymer unit having a polar group other than a hydroxyl group, the weight is calculated from

production conditions of a copolymer;

Wq: weight of a unit having a branched structure, the weight is calculated from production conditions of a side-chain mercapto group-containing polyvinyl alcohol and a copolymer, and used only for the formula (2);

$$\text{Rs: saponification degree} = \text{“}(o^1 + p^1) / (n^1 + o^1 + p^1) \text{ or } (o^2 + p^2) / (n^2 + o^2 + p^2)\text{”},$$

the saponification degree is a molar percent of vinyl alcohol polymer unit before polyenization, and is calculated from copolymer analysis;

1 - Rs: molar percent of vinyl acetate monomer unit (vinyl acetate monomer unit: 86.09 g/mol) ["$(n^1) / (n^1 + o^1 + p^1)$ or $(n^2) / (n^2 + o^2 + p^2)$"]; and

Rp: polyenization ratio in copolymer (polyenized degree)

Measurement of Water Content

A sample copolymer was impregnated in ion-exchanged water at room temperature for 5 hours. The weight of the sample copolymer removed from the water and allowed surface water thereof to be wiped off with filter paper was determined as a weight of swollen copolymer (or swell weight). Thereafter the copolymer was dried at 40°C for 5 hours under vacuum to measure a weight as a weight of dried copolymer (or dry weight). The water content of the copolymer was defined according to the following formula.

$$[\text{swell weight - dry weight}] / [(\text{swell weight - dry weight}) + \text{dry weight}] \times 100$$

Measurement of Dynamic Transport Number

**[0139]** As for measuring the dynamic transport number of the ion exchange membrane, an ion exchange membrane was held in two-compartment cell each having a platinum black electrode plate as shown in Fig. 1, the two-compartment cell was filled with a 0.5 mol/L-NaCl solution on both sides of the ion exchange membrane, and electrodialysis was carried out. By using an ion chromatography, change in ion amounts before and after dialysis is calculated. Thus calculated values were substituted into the following equation to calculate the dynamic transport number $t_d^+$.

$$t_d^+ = \Delta m / Ea$$

$t_d^+$: dynamic transport number

Ea: theoretical equivalent amount = 1xt/F

$\Delta$m: moved equivalent

F: Faraday constant

Measurement of Membrane Resistance

As for electrical resistance of membrane, an ion exchange membrane was interposed between compartments which constitute two-compartment cell, each of the compartments comprising a platinum black electrode plate as shown in Fig. 2, and a NaCl solution (0.5 mol/L) was filled into the two compartments so as for both sides of the membrane to be filled with. Resistance between the electrodes was measured at 25°C with operating AC bridge (frequency: 1,000 cycles/sec) under each condition with or without the ion exchange membrane. Difference in resistance under the conditions between with and without the ion exchange membrane was calculated. It should be noted that the membrane used in the above measurement was conditioned in a NaCl solution (0.5 mol/L) in advance so as to be reached in equilibrium.

Synthesis Example 1

Production of Terminal Mercapto Group-Containing Polyvinyl Alcohols (PVA-1, PVA-2, and PVA-3)

By the method described in JP Laid-open Patent Publication No. 59-187003 (related to a terminal mercapto group-containing polyvinyl alcohol and a method for producing the same), were synthesized polyvinyl alcohol polymers each having a mercapto group at a terminal (PVA-1, PVA-2, and PVA-3). The obtained PVA-1 had a viscosity average polymerization degree of 1,500 measured according to JIS K 6726 and a saponification degree of 99.9% by mole. The obtained PVA-2 had a viscosity average polymerization degree of 1,500 measured according to JIS K 6726 and a saponification degree of 97.4% by mole. The obtained PVA-3 had a viscosity average polymerization degree of 500 measured according to JIS K 6726 and a saponification degree of 99.8% by mole.

Synthesis Example 2

Synthesis of Thioester Monomer-Modified Polyvinyl Acetate

(Previous stage to synthesize side-chain mercapto group-containing polyvinyl alcohol)

Into a reactor equipped with a stirrer, a reflux condenser, an argon feed tube, a port for adding a comonomer, and a port for adding a polymerization initiator, were charged 450 parts by mass of vinyl acetate, 0.64 parts by mass of thioester monomer represented by the following formula (b-11) as a comonomer, and 330 parts by mass of methanol. The reaction system was purged with argon by argon bubbling for 30 minutes. Separately, a thioester monomer (b-11) solution in methanol (concentration 4% by mass) was prepared as a comonomer solution (hereinafter referred to as a delay solution) for sequential addition, and purged with argon by argon bubbling for 30 minutes. After heating the reactor to increase the temperature thereof, 0.1 part by mass of 2,2'-azobisisobutyronitrile was added into the reactor having an internal temperature of 60°C to initiate polymerization. During polymerization reaction, the prepared delay solution was added into the reaction system so as to keep constant the molar ratio of the monomers in the reaction solution (molar ratio of vinyl acetate to thioester monomer (b-11)). After polymerization for 210 minutes at 60°C, the polymerization was terminated by cooling. The polymerization ratio at the time of termination was 40%. Subsequently, unreacted vinyl acetate monomers were removed from the reaction system with occasional addition of methanol at 30°C under reduced pressure to obtain a methanol solution of a modified polyvinyl acetate into which the thioester monomer (b-11) was introduced.

Synthesis Example 3

Synthesis of Side-Chain Mercapto Group-Containing Polyvinyl Alcohol (PVA-4)

Into the methanol solution of the thioester monomer (b-11)-introduced polyvinyl acetate obtained in the Synthesis Example 2, were added methanol, and further a sodium hydroxide solution in methanol (concentration: 12.8%) to carry out saponification at 40°C (concentration of the thioester monomer (b-11)-introduced polyvinyl acetate in the saponification solution: 30%; molar ratio of sodium hydroxide to vinyl acetate unit in the thioester monomer (b-11)-introduced polyvinyl acetate: 0.040). At about 8 minutes after adding the sodium hydroxide solution in methanol, a gelled-like material was produced. The gelled-like material was then pulverized by a pulverizer, so as to be subjected further saponification for 52 minutes at 40°C. After neutralization of the remaining alkali by adding methyl acetate, the resultant was washed sufficiently with methanol, and dried for 12 hours at 40°C in a vacuum dryer so as to obtain a side-chain mercapto group-containing PVA (PVA-4). The chemical shift values obtained by $^1$H-NMR spectroscopy are shown below. The content (modification level) of the structural units represented by the formula (29) determined by $^1$H-NMR was 1.0% by mole. Further, thus obtained PVA-4 had a viscosity-average polymerization degree measured according to JIS K6726 of 1,000 and a saponification degree of 97.9% by mole.
$^1$H-NMR (270 MHz, $D_2O$ (containing DSS), 60°C) $\delta$ (ppm): 1.3-1.9 ($-CH_2CH(OH)-$), 2.0-2.2 ($-CH_2CH(OCOCH_3)-$), 2.5-2.6 ($CONHCH_2CH_2SH$), 3.5-4.2 ($-CH_2CH(OH)-$, $-CH(COOH)CH-$, $CONHCH_2CH_2SH$)

Synthesis Example 4

Synthesis of Block Copolymer PVA-b-AMPS (P-1)

Into a four-necked separable flask (500 mL) equipped with a reflux condenser and a stirrer, were put 115 g of water, 25.0 g of the terminal mercapto group-containing polyvinyl alcohol (PVA-1), and 6.2 g of 2-acrylamido-2-methylpropanesulfonic acid (AMPS, purity of 97%, Wako Pure Chemical Industries, Ltd.), and then the reaction system was purged with nitrogen by nitrogen bubbling to prepare an aqueous solution containing the above-mentioned components with heating to 90°C with stirring. After purging, 5.6 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 4 hour with maintaining the inside temperature at 90°C. Subsequently, the resultant was cooled to obtain an aqueous solution of block copolymer PVA-b-AMPS (P-1) being a block copolymer of polyvinyl alcohol and 2-acrylamido-2-methylpropanesulfonic acid. The aqueous solution had a pH of 0.9. A part of the resulting aqueous solution was dried and then dissolved in heavy water to be subjected to $^1$H-NMR measurement at 500 MHz. As a result, the obtained copolymer had a content of AMPS units of 5% by mole.

Synthesis Example 5

Synthesis of Block Copolymer PVA-b-AMPS (P-2)

Into a four-necked separable flask (500 mL) equipped with a reflux condenser and a stirrer, were put 136 g of water, 25.0 g of the terminal mercapto group-containing polyvinyl alcohol (PVA-1), and 13.1 g of 2-acrylamido-2-methylpropanesulfonic acid (AMPS, purity of 97%, Wako Pure Chemical Industries, Ltd.), and then the reaction system was purged with nitrogen by nitrogen bubbling to prepare an aqueous solution containing the above-mentioned components with heating to 90°C with stirring. After purging, 11.9 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 4 hour with maintaining the inside temperature at 90°C. Subsequently, the resultant was cooled to obtain an aqueous solution of block copolymer PVA-b-AMPS (P-2) being a block copolymer of polyvinyl alcohol and 2-acrylamido-2-methylpropanesulfonic acid. The aqueous solution had a pH of 0.9. A part of the resulting aqueous solution was dried and then dissolved in heavy water to be subjected to $^1$H-NMR measurement at 500 MHz. As a result, the obtained copolymer had a content of AMPS units of 10% by mole.

Synthesis Example 6

Synthesis of Block Copolymer PVA-b-AMPS (P-3)

Into a four-necked separable flask (500 mL) equipped with a reflux condenser and a stirrer, were put 154 g of water, 25.0 g of the terminal mercapto group-containing polyvinyl alcohol (PVA-1), and 19.2 g of 2-acrylamido-2-methylpropanesulfonic acid (AMPS, purity of 97%, Wako Pure Chemical Industries, Ltd.), and then the reaction system was purged with nitrogen by nitrogen bubbling to prepare an aqueous solution containing the above-mentioned components with heating to 90°C with stirring. After purging, 17.4 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 4 hour with maintaining the inside temperature at 90°C. Subsequently, the resultant was cooled to obtain an aqueous solution of block copolymer PVA-b-AMPS (P-3) being a block copolymer of polyvinyl alcohol and 2-acrylamido-2-methylpropanesulfonic acid. The aqueous solution had a pH of 0.9. A part of the resulting aqueous solution was dried and then dissolved in heavy water to be subjected to $^1$H-NMR measurement at 500 MHz. As a result, the obtained copolymer had a content of AMPS units of 14% by mole.

Synthesis Example 7

Synthesis of Block Copolymer PVA-b-AMPS (P-4)

Into a four-necked separable flask (500 mL) equipped with a reflux condenser and a stirrer, were put 185 g of water, 25.0 g of the terminal mercapto group-containing polyvinyl alcohol (PVA-1), and 29.4 g of 2-acrylamido-2-methylpropanesulfonic acid (AMPS, purity of 97%, Wako Pure Chemical Industries, Ltd.), and then the reaction system was purged with nitrogen by nitrogen bubbling to prepare an aqueous solution containing the above-mentioned components with heating to 90°C with stirring. After purging, 26.8 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 4 hour with maintaining the inside temperature at 90°C. Subsequently, the resultant was cooled to obtain an aqueous solution of block copolymer PVA-b-AMPS (P-4) being a block copolymer of polyvinyl alcohol and 2-acrylamido-2-methylpropanesulfonic acid. The aqueous solution had a pH of 0.8. A part of the resulting aqueous solution was dried and then dissolved in heavy water to be subjected to $^1$H-NMR measurement at 500 MHz. As a result, the obtained copolymer had a content of AMPS units of 20% by mole.

Synthesis Example 8

Synthesis of Block Copolymer PVA-b-AMPS (P-5)

Into a four-necked separable flask (500 mL) equipped with a reflux condenser and a stirrer, were put 247 g of water, 25.0 g of the terminal mercapto group-containing polyvinyl alcohol (PVA-1), and 50.5 g of 2-acrylamido-2-methylpropanesulfonic acid (AMPS, purity of 97%, Wako Pure Chemical Industries, Ltd.), and then the reaction system was purged with nitrogen by nitrogen bubbling to prepare an aqueous solution containing the above-mentioned components with heating to 90°C with stirring. After purging, 45.9 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 4 hour with maintaining the inside temperature at 90°C. Subsequently, the resultant was cooled to obtain an aqueous solution of block copolymer PVA-b-AMPS (P-5) being a block copolymer of polyvinyl alcohol and 2-acrylamido-2-methylpropanesulfonic acid. The aqueous solution had a pH of 0.8. A part of the resulting aqueous solution was dried and then dissolved in heavy water to be subjected to $^{1}$H-NMR measurement at 500 MHz. As a result, the obtained copolymer had a content of AMPS units of 30% by mole.

Synthesis Example 9

Synthesis of Block Copolymer PVA-b-AMPS (P-6)

Except for using the terminal mercapto group-containing polyvinyl alcohol (PVA-2) instead of the terminal mercapto group-containing polyvinyl alcohol (PVA-1) in Example 3, the procedures were performed in the same way as Example 3 to obtain an aqueous solution of block copolymer PVA-b-AMPS (P-6) being a block copolymer of polyvinyl alcohol and 2-acrylamido-2-methylpropanesulfonic acid. The aqueous solution had a pH of 0.9. A part of the resulting aqueous solution was dried and then dissolved in heavy water to be subjected to $^{1}$H-NMR measurement at 500 MHz. As a result, the obtained copolymer had a content of AMPS units of 14% by mole.

Synthesis Example 10

Synthesis of Block Copolymer PVA-b-AMPS (P-7)

Except for using the terminal mercapto group-containing polyvinyl alcohol (PVA-3) instead of the terminal mercapto group-containing polyvinyl alcohol (PVA-1) in Example 3, the procedures were performed in the same way as Example 3 to obtain an aqueous solution of block copolymer PVA-b-AMPS (P-7) being a block copolymer of polyvinyl alcohol and 2-acrylamido-2-methylpropanesulfonic acid (AMPS). The aqueous solution had a pH of 0.9. A part of the resulting aqueous solution was dried and then dissolved in heavy water to be subjected to $^{1}$H-NMR measurement at 500 MHz. As a result, the obtained copolymer had a content of AMPS units of 14% by mole.

Synthesis Example 11

Synthesis of Graft Copolymer PVA-g-AMPS (P-8)

Except for using the side chain-mercapto group-containing polyvinyl alcohol (PVA-4) instead of the terminal mercapto group-containing polyvinyl alcohol (PVA-1) in Example 1, the procedures were performed in the same way as Example 1 to obtain an aqueous solution of graft copolymer PVA-g-AMPS (P-8) being a graft copolymer of polyvinyl alcohol and 2-acrylamido-2-methylpropanesulfonic acid (AMPS). The aqueous solution had a pH of 0.9. A part of the resulting aqueous solution was dried and then dissolved in heavy water to be subjected to $^{1}$H-NNM measurement at 500 MHz. As a result, the obtained copolymer had a content of AMPS units of 14% by mole.

Synthesis Example 12

Synthesis of Block Copolymer PVA-b-VSA (P-9)

Into a four-necked separable flask (500 mL) equipped with a reflux condenser and a stirrer, were put 117 g of water, 25.0 g of the terminal mercapto group-containing polyvinyl alcohol (PVA-1), and 7.0 g of vinyl sulfonic acid (VSA, purity of 95%, ASAHI KASEI FINECHEM CO., LTD.), and then the reaction system was purged with nitrogen by nitrogen bubbling to prepare an aqueous solution containing the above-mentioned components with heating to 90°C with stirring. After purging, 6.2 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 24 hour with maintaining the inside temperature at 90°C. Subsequently, the resultant was cooled to obtain an aqueous solution of block copolymer PVA-b-VSA (P-9) being a block copolymer of polyvinyl alcohol and vinyl sulfonic acid. The aqueous solution had a pH of 0.9. A part of the resulting aqueous solution was dried and then dissolved in heavy water to be subjected to $^{1}$H-NMR measurement at 500 MHz. As a result, the obtained copolymer had a content of VSA units of 10% by mole.

Synthesis Example 13

Synthesis of Block Copolymer PVA-b-PSS (P-10)

Into a four-necked separable flask (300 mL) equipped with a reflux condenser and a stirrer, were put 136 g of water, 25.0 g of the terminal mercapto group-containing polyvinyl alcohol (PVA-1), and 14.0 g of p-styrenesulfonic acid sodium salt (PSS, purity of 90%, TOSOH ORGANIC CHEMICAL CO., LTD.), and then the reaction system was purged with nitrogen by nitrogen bubbling to prepare an aqueous solution containing the above-mentioned components with heating to 90°C with stirring. After purging, 11.8 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 4 hour with maintaining the inside temperature at 90°C. Subsequently, the resultant was cooled to obtain an aqueous solution of block copolymer PVA-b-PSS (P-10) being a block copolymer of polyvinyl alcohol and p-styrenesulfonic acid sodium salt. The aqueous solution had a pH of 7.0. A part of the resulting aqueous solution was dried and then dissolved in heavy water to be subjected to $^{1}$H-NMR measurement at 500 MHz. As a result, the obtained copolymer had a content of PSS units of 10% by mole.

Synthesis Example 14

Synthesis of Block Copolymer PVA-b-MAPTAC (P-11)

Into a four-necked separable flask (300 mL) equipped with a reflux condenser and a stirrer, were put 138 g of water, 25.0 g of the terminal mercapto group-containing polyvinyl alcohol (PVA-1), and 14.1 g of (3-acrylamide propyl)trimethyl ammonium chloride (MAPTAC, purity of 96%, TOKYO CHEMICAL INDUSTRY CO., LTD.), and then the reaction system was purged with nitrogen by nitrogen bubbling to prepare an aqueous solution containing the above-mentioned components with heating to 90°C with stirring. After purging, 12.7 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 4 hour with maintaining the inside temperature at 90°C. Subsequently, the resultant was cooled to obtain an aqueous solution of block copolymer PVA-b-MAPTAC (P-11) being a block copolymer of polyvinyl alcohol and (3-acrylamide propyl)trimethyl ammonium chloride. The aqueous solution had a pH of 9.3. A part of the resulting aqueous solution was dried and then dissolved in heavy water to be subjected to $^{1}$H-NMR measurement at 500 MHz. As a result, the obtained copolymer had a content of MAPTAC units of 10% by mole.

Synthesis Example 15

Synthesis of Block Copolymer PVA-b-DAPMA (P-12)

Into a four-necked separable flask (300 mL) equipped with a reflux condenser and a stirrer, were put 138 g of water, 25.0 g of the terminal mercapto group-containing polyvinyl alcohol (PVA-1), and 10.7 g of N-[3-(dimethylamino)propyl] methacrylamide (DAPMA, purity of 97%, Wako Pure Chemical Industries, Ltd.), and then the reaction system was purged with nitrogen by nitrogen bubbling to prepare an aqueous solution containing the above-mentioned components with heating to 90°C with stirring. After purging, 9.8 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 4 hours with maintaining the inside temperature at 90°C. Subsequently, the resultant was cooled to obtain an aqueous solution of block copolymer PVA-b-DAPMA (P-12) being a block copolymer of polyvinyl alcohol and N-[3-(dimethylamino)propyl] methacrylamide. The aqueous solution had a pH of 10.3. Apart of the resulting aqueous solution was dried and then dissolved in heavy water to be subjected to $^{1}$H-NMR measurement at 500 MHz. As a result, the obtained copolymer had a content of DAPMA units of 10% by mole.

Synthesis Example 16

Synthesis of Block Copolymer PVA-b-VBTAC (P-13)

Into a four-necked separable flask (500 mL) equipped with a reflux condenser and a stirrer, were put 137 g of water, 25.0 g of the terminal mercapto group-containing polyvinyl alcohol (PVA-1), and 13.4 g of vinylbenzyl trimethylammonium chloride (VBTAC, purity of 97%, AGC SEIMI CHEMICAL CO., LTD.), and then the reaction system was purged with nitrogen by nitrogen bubbling to prepare an aqueous solution containing the above-mentioned components with heating to 90°C with stirring. After purging, 12.2 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 24 hour with maintaining the inside temperature at 90°C. Subsequently, the resultant was cooled to obtain an aqueous solution of block copolymer PVA-b-VBTAC (P-13) being a block copolymer of polyvinyl alcohol and vinylbenzyl trimethylammonium chloride. The aqueous solution had a pH of 8.0. A part of the resulting aqueous solution was dried and then dissolved in heavy water to be subjected to $^1$H-NMR measurement at 500 MHz. As a result, the obtained copolymer had a content of VBTAC units of 10% by mole.

Synthesis Example 17

Synthesis of Block Copolymer PVA-b-VBTAC (P-14)

Into a four-necked separable flask (500 mL) equipped with a reflux condenser and a stirrer, were put 155 g of water, 25.0 g of the terminal mercapto group-containing polyvinyl alcohol (PVA-1), and 19.6 g of vinylbenzyl trimethylammonium chloride (VBTAC, purity of 97%, AGC SEIMI CHEMICAL CO., LTD.), and then the reaction system was purged with nitrogen by nitrogen bubbling to prepare an aqueous solution containing the above-mentioned components with heating to 90°C with stirring. After purging, 17.8 mL of a 2.0% 2,2'-azobis[2-methyl-N-(2-hydroxyethyl)-2-propionamide] aqueous solution was successively added to the aqueous solution for 1.5 hours to initiate and proceed polymerization, followed by further polymerization for 24 hour with maintaining the inside temperature at 90°C. Subsequently, the resultant was cooled to obtain an aqueous solution of block copolymer PVA-b-VBTAC (P-14) being a block copolymer of polyvinyl alcohol and vinylbenzyl trimethylammonium chloride. The aqueous solution had a pH of 8.8. A part of the resulting aqueous solution was dried and then dissolved in heavy water to be subjected to $^1$H-NMR measurement at 500 MHz. As a result, the obtained copolymer had a content of VBTAC units of 14% by mole.

Example 1

Each of the aqueous solutions containing one of the copolymers (P-1 to P-9) obtained in Synthesis Examples 4 to 12, respectively, was cast onto an acrylic cast plate (vertical: 270 mm, horizontal: 210 mm) without adjusting pH of the solution. After removing excess liquid and bubbles, each of the cast liquid was dried for 30 minutes at 80°C using a hot air drier, and then heat-treated for 30 minutes at 160°C using a machine for high-temperature heat treatment to produce film-shaped copolymers Q-1 to Q-9, each containing polyenized monomer units.

Example 2

Each of the aqueous solutions containing one of the copolymers (P-10 to P-14) obtained in Synthesis Examples 13 to 17, respectively, was adjusted to have a pH of 1.0 by adding a concentrated sulfuric acid and was cast onto an acrylic cast plate (vertical: 270 mm, horizontal: 210 mm). After removing excess liquid and bubbles, each of the cast liquid was dried for 30 minutes at 80°C using a hot air drier, and then heat-treated for 30 minutes at 160°C using a machine for high-temperature heat treatment to produce film-shaped copolymers Q-10 to Q-14, each containing polyenized monomer units.

Comparative Example 1

Each of the aqueous solutions containing one of the copolymers (P-1 to P-9) obtained in Synthesis Examples 4 to 12, respectively, was adjusted to have a pH of 7.0 by adding a 1.0 M sodium hydroxide and was cast onto an acrylic cast plate (vertical: 270 mm, horizontal: 210 mm). After removing excess liquid and bubbles, each of the cast liquid was dried for 30 minutes at 80°C using a hot air drier, and then heat-treated for 30 minutes at 160°C using a machine for high-temperature heat treatment to produce film-shaped copolymers R-1 to R-9.

Comparative Example 2

Each of the aqueous solutions containing one of the copolymers (P-10 to P-14) obtained in Synthesis Examples 13 to 17, respectively, was cast onto an acrylic cast plate (vertical: 270 mm, horizontal: 210 mm) without adjusting pH of the solution. After removing excess liquid and bubbles, each of the cast liquid was dried for 30 minutes at 80°C using a hot air drier, and then heat-treated for 30 minutes at 160°C using a machine for high-temperature heat treatment to produce film-shaped copolymers R-10 to R-14.

Example 3 and Comparative Example 3

Into 1 L of a sodium sulfate aqueous solution (350 g/L), sulfuric acid was added to adjust pH of the solution (25°C) to 1.0. Into the solution, was further added 40 mL of a glutaraldehyde aqueous solution (25%) to prepare a treatment solution. After heating the treatment solution to 50°C, both the polyenized copolymers Q-1 to Q-14 (Example 3) and the copolymers R-1 to R-14 (Comparative Example 3) were immersed into the heated treatment solution for 30 minutes to be subjected to crosslinking treatment.

Table 1 shows measured results of polyenization ratio and water content ratio in Examples 1, 2, and 3. Table 2 shows measured results of polyenization ratio and water content ratio in Comparative Examples 1, 2 and 3.

Table 1

| Copolymer | Polyenization ratio (mol%) | Water content ratio before crosslinking (wt%) | Water content ratio after crosslinking (wt%) |
|---|---|---|---|
| Q-1 | 77.1 | 20.4 | 18.8 |
| Q-2 | 89.0 | 37.2 | 21.9 |
| Q-3 | 92.3 | 36.8 | 22.6 |
| Q-4 | 95.7 | 59.0 | 34.9 |
| Q-5 | 99.1 | 71.7 | 57.2 |
| Q-6 | 91.6 | 39.4 | 32.3 |
| Q-7 | 94.5 | 31.8 | 26.2 |
| Q-8 | 92.8 | 37.4 | 30.0 |
| Q-9 | 82.1 | 43.0 | 33.1 |
| Q-10 | 88.7 | 32.4 | 27.6 |
| Q-11 | 15.9 | 141.1 | 64.8 |
| Q-12 | 14.5 | 128.2 | 73.2 |
| Q-13 | 38.2 | 72.0 | 44.2 |
| Q-14 | 45.4 | 81.9 | 59.5 |

Table 2

| Copolymer | Water content ratio before crosslinking (wt%) | Water content ratio after crosslinking (wt%) |
|---|---|---|
| R-1 | Unmeasurable because of dissolution | 62.9 |
| R-2 | Unmeasurable because of dissolution | 76.2 |
| R-3 | Unmeasurable because of dissolution | 84.8 |
| R-4 | Unmeasurable because of dissolution | 100.7 |
| R-5 | Unmeasurable because of dissolution | 134.5 |
| R-6 | Unmeasurable because of dissolution | 82.2 |
| R-7 | Unmeasurable because of dissolution | 80.9 |

(continued)

| Copolymer | Water content ratio before crosslinking (wt%) | Water content ratio after crosslinking (wt%) |
|---|---|---|
| R-8 | Unmeasurable because of dissolution | 92.5 |
| R-9 | Unmeasurable because of dissolution | 50.2 |
| R-10 | Unmeasurable because of dissolution | 49.2 |
| R-11 | Unmeasurable because of dissolution | 77.1 |
| R-12 | Unmeasurable because of dissolution | 100.0 |
| R-13 | Unmeasurable because of dissolution | 59.0 |
| R-14 | Unmeasurable because of dissolution | 80.3 |

Comparison of water content ratio before crosslinking between Tables 1 and 2 shows that polyenization can impart water resistance to the copolymers even without crosslinking. Comparison of water content ratio after crosslinking between Tables 1 and 2 shows that polyenization can achieve lower water content of the copolymers so as to suppress swelling of the copolymers due to water bearing, resulting in excellent dimensional stability.

Table 3 shows that each of the copolymers in Examples having polyene fractions corresponds to a copolymer represented by the general formula (1) or (2) based on the polyenization ratio of Examples shown in Table 1. It should be noted that $n^1$ or $n^2$ is assumed to be residual acetic acid groups in the block copolymer PVA or the graft copolymer PVA both derived from a starting material without being affected by polyene reaction. As for $m^1$ and $q^2$, they are also assumed in the same way.

Table 3

| Copolymer | Saponification degree (mol%) | Modification level (mol%) | Polyenization ratio (mol%) | $n^1$ or $n^2$ (mol%) | $o^1$ or $o^2$ (mol%) | $p^1$ or $p^2$ (mol%) | $m^1$ or $q^2$ x $m^2$ (mol%) |
|---|---|---|---|---|---|---|---|
| Q-1 | 99.9 | 5 | 77.1 | 0.1 | 22.8 | 77.1 | 5 |
| Q-2 | 99.9 | 10 | 89.0 | 0.1 | 10.9 | 89.0 | 10 |
| Q-3 | 99.9 | 14 | 92.3 | 0.1 | 7.6 | 92.3 | 14 |
| Q-4 | 99.9 | 20 | 95.7 | 0.1 | 4.2 | 95.7 | 20 |
| Q-5 | 99.9 | 30 | 99.1 | 0.1 | 0.8 | 99.1 | 30 |
| Q-6 | 97.4 | 14 | 91.6 | 2.6 | 5.8 | 91.6 | 14 |
| Q-7 | 99.8 | 14 | 94.5 | 0.2 | 5.3 | 94.5 | 14 |
| Q-8 | 97.9 | 14 | 92.8 | 2.1 | 5.1 | 92.8 | 14 |
| Q-9 | 99.9 | 10 | 82.1 | 0.1 | 17.8 | 82.1 | 10 |
| Q-10 | 99.9 | 10 | 88.7 | 0.1 | 11.2 | 88.7 | 10 |
| Q-11 | 99.9 | 10 | 15.9 | 0.1 | 84.0 | 15.9 | 10 |
| Q-12 | 99.9 | 10 | 14.5 | 0.1 | 85.4 | 14.5 | 10 |
| Q-13 | 99.9 | 10 | 38.2 | 0.1 | 61.7 | 38.2 | 10 |
| Q-14 | 99.9 | 14 | 45.4 | 0.1 | 54.5 | 45.4 | 14 |

Example 4

Each of the copolymer aqueous solutions P-1 to P-9 obtained in Synthesis Examples 4 to 12 was cast without adjusting pH using an applicator with a gap of 500 μm on a PET film, and dried for 30 minutes at 80°C using a hot air drier. Then the PET film was peeled off to obtain a film. Thus obtained films were heat-treated for 30 minutes at 160°C using a machine for high-temperature heat treatment to obtain ion exchange membranes QF-1 to QF-9, each containing polyenized monomer units. The ion exchange membranes were measured for their polyenization ratios, membrane

resistances, and dynamic transport ratios. Table 4 shows the obtained results.

Example 5

Each of the copolymer aqueous solutions P-10 to P-14 obtained in Synthesis Examples 13 to 17 was adjusted to have a pH of 1.0 by adding a concentrated sulfuric acid and then was cast using an applicator with a gap of 500 μm on a PET film, and dried for 30 minutes at 80°C using a hot air drier. Then the PET film was peeled off to obtain a film. Thus obtained films were heat-treated for 30 minutes at 160°C using a machine for high-temperature heat treatment to obtain ion exchange membranes QF-10 to QF-14, each containing polyenized monomer units. The ion exchange membranes were measured for their polyenization ratios, membrane resistances, and dynamic transport ratios. Table 4 shows the obtained results.

Example 6

Each of the copolymer aqueous solutions P-3 and P-10 obtained in Synthesis Examples 6 and 13, respectively, was adjusted to have a pH of 1.0 by adding a concentrated sulfuric acid. The solution was cast using an applicator with a gap of 500 μm on a PET film. To the cast solution, was adhered a vinylon nonwoven fabric BNF No. 2 (produced by Kuraray Co., Ltd.) and then dried for 30 minutes at 80°C using a hot air drier. Then the PET film was peeled off to obtain a composite. Thus obtained composites were heat-treated for 30 minutes at 160°C using a machine for high-temperature heat treatment to obtain ion exchange membranes QF-15 and QF-16, each containing polyenized monomer units. The ion exchange membranes were measured for their polyenization ratios, membrane resistances, and dynamic transport ratios. Table 4 shows the obtained results.

Table 4

| | Ion exchange membrane | Polymer | Membrane resistance ($\Omega cm^2$) | Dynamic transport ratio (%) | Polyenization ratio (mol%) |
|---|---|---|---|---|---|
| Ex. 4 | QF-1 | P-1 | 92.3 | 99 | 77.1 |
| | QF-2 | P-2 | 7.2 | 99 | 89.0 |
| | QF-3 | P-3 | 5.0 | 99 | 92.3 |
| | QF-4 | P-4 | 0.9 | 99 | 95.7 |
| | QF-5 | P-5 | 0.6 | 99 | 99.1 |
| | QF-6 | P-6 | 4.7 | 99 | 91.6 |
| | QF-7 | P-7 | 5.3 | 99 | 94.5 |
| | QF-8 | P-8 | 4.5 | 99 | 92.8 |
| | QF-9 | P-9 | 1.5 | 99 | 82.1 |
| Ex. 5 | QF-10 | P-10 | 1.1 | 99 | 88.7 |
| | QF-11 | P-11 | 0.4 | 95 | 15.9 |
| | QF-12 | P-12 | 1.2 | 98 | 14.5 |
| | QF-13 | P-13 | 1.4 | 98 | 38.2 |
| | QF-14 | P-14 | 0.8 | 98 | 45.4 |
| Ex. 6 | QF-15 | P-3 | 7.3 | 99 | 90.8 |
| | QF-16 | P-10 | 5.2 | 99 | 78.6 |

Comparative Example 4

Each of the copolymer aqueous solutions P-1 to P-9 obtained in Synthesis Examples 4 to 12, respectively, was adjusted to have a pH of 7.0 by adding 1.0 M of sodium hydroxide. The solution was cast using an applicator with a gap of 500 μm on a PET film, and dried for 30 minutes at 80°C using a hot air drier. Then the PET film was peeled off to obtain a film. Thus obtained films were heat-treated for 30 minutes at 160°C using a machine for high-temperature heat treatment to obtain ion exchange membranes RF-1 to RF-9. The ion exchange membranes were measured for their

polyenization ratios, membrane resistances, and dynamic transport ratios. Table 5 shows the obtained results. The obtained ion exchange membranes were easily dissolved in water, and was unmeasurable for membrane resistance and dynamic transport ratio.

Comparative Example 5

Each of the copolymer aqueous solutions P-10 to P-14 obtained in Synthesis Examples 13 to 17, respectively, was cast without adjusting pH using an applicator with a gap of 500 μm on a PET film, and dried for 30 minutes at 80°C using a hot air drier. Then the PET film was peeled off to obtain a film. Thus obtained films were heat-treated for 30 minutes at 160°C using a machine for high-temperature heat treatment to obtain ion exchange membranes RF-10 to RF-14. The ion exchange membranes were measured for their polyenization ratios, membrane resistances, and dynamic transport ratios. Table 5 shows the obtained results. The obtained ion exchange membranes were easily dissolved in water, and were unmeasurable for membrane resistance and dynamic transport ratio.

Table 5

| | Ion exchange membrane | Polymer | Membrane resistance ($\Omega cm^2$) | Dynamic transport ratio (%) | Polyenization ratio (mol%) |
|---|---|---|---|---|---|
| Com. Ex. 4 | RF-1 | P-1 | Unmeasurable because of dissolution | Unmeasurable because of dissolution | No polyene fraction |
| | RF-2 | P-2 | Unmeasurable because of dissolution | Unmeasurable because of dissolution | No polyene fraction |
| | RF-3 | P-3 | Unmeasurable because of dissolution | Unmeasurable because of dissolution | No polyene fraction |
| | RF-4 | P-4 | Unmeasurable because of dissolution | Unmeasurable because of dissolution | No polyene fraction |
| | RF-5 | P-5 | Unmeasurable because of dissolution | Unmeasurable because of dissolution | No polyene fraction |
| | RF-6 | P-6 | Unmeasurable because of dissolution | Unmeasurable because of dissolution | No polyene fraction |
| | RF-7 | P-7 | Unmeasurable because of dissolution | Unmeasurable because of dissolution | No polyene fraction |
| | RF-8 | P-8 | Unmeasurable because of dissolution | Unmeasurable because of dissolution | No polyene fraction |
| | RF-9 | P-9 | Unmeasurable because of dissolution | Unmeasurable because of dissolution | No polyene fraction |
| Com. Ex. 5 | RF-10 | P-10 | Unmeasurable because of dissolution | Unmeasurable because of dissolution | No polyene fraction |
| | RF-11 | P-11 | Unmeasurable because of dissolution | Unmeasurable because of dissolution | No polyene fraction |
| | RF-12 | P-12 | Unmeasurable because of dissolution | Unmeasurable because of dissolution | No polyene fraction |
| | RF-13 | P-13 | Unmeasurable because of dissolution | Unmeasurable because of dissolution | No polyene fraction |
| | RF-14 | P-14 | Unmeasurable because of dissolution | Unmeasurable because of dissolution | No polyene fraction |

Table 4 reveals that vinylene monomer units introduced by polyenized reaction can impart water resistance without crosslinking treatment so as to achieve appropriate property for ion exchange membrane (Examples 4 to 6). On the contrary, Table 5 reveals that ion exchange membranes without polyene formation deteriorate in water resistance (Comparative Examples 4 to 5).

INDUSTRIAL APPLICABILITY

The copolymer of the present invention can be widely used as base material or modifier for various materials, for example, ion-exchange membranes, ion-exchange resins, ion-adsorbing materials, solid electrolyte for fuel cell, conductive polymer materials, antistatic materials, primary batteries, secondary batteries, solid electrolytic capacitors, inks, binders (adhesive), health care products such as pharmaceuticals and cosmetics, food additives, detergents, and others, and therefore industrially applicable.

With reference to Figures, preferred embodiments according to the present invention are shown and described. It is to be understood that various changes, modifications and omissions may be made without departing from the spirit according to the present invention and are encompassed in the scope of the claims.

Accordingly, such addition, modification and deletion are to be construed as included in the scope of the present invention.

[Description of reference numerals]

A: power
B: ampere meter
C: coulomb meter
D: voltmeter
E: motor
F: stirrer
G: cathode electrode
H: anode electrode
I: 0.5M NaCl aqueous solution
J: ion exchange membrane (effective membrane area: 8.0 $cm^2$)
K: ion exchange membrane (effective membrane area: 1.0 $cm^2$)
L: platinum electrode
M: NaCl aqueous solution
N: water bath
O: LCR meter

## Claims

1. A copolymer (P) including, as structural units, a vinyl alcohol monomer unit (A), a vinylene monomer unit (B), and a polymer unit (C) having a polar group other than a hydroxyl group.

2. The copolymer as claimed in Claim 1, wherein the copolymer (P) is a copolymer (P1) represented by the following general formula (1):

[Chem. 1]

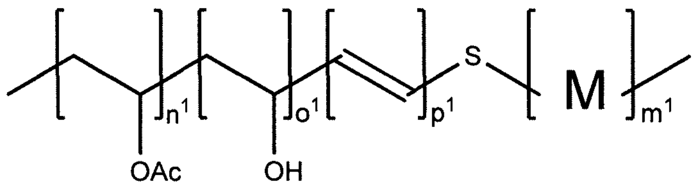

(1)

wherein $0.5000 \leq (o^1 + p^1) / (n^1 + o^1 + p^1) \leq 0.9999$; $0.100 \leq p^1 / (n^1 + o^1 + p^1) \leq 0.999$; $0.01 \leq m^1 / (m^1 + n^1 + o^1 + p^1) \leq 0.50$; and M is a monomer unit having a polar group other than a hydroxyl group.

3. The copolymer as claimed in Claim 1, wherein the copolymer (P) is a copolymer (P2) represented by the following general formula (2):

[Chem. 2]

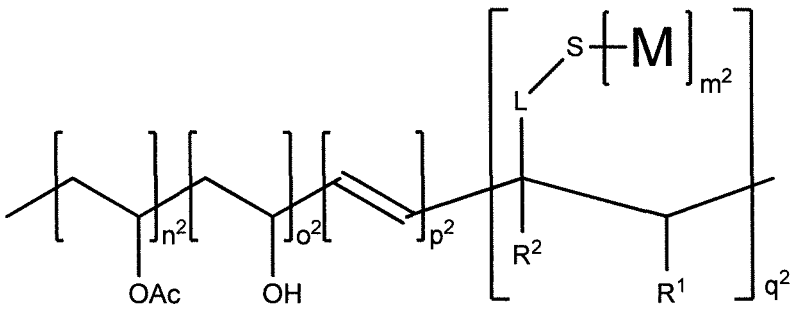

(2)

wherein $0.5000 \leq (o^2 + p^2) / (n^2 + o^2 + p^2) \leq 0.9999$; $0.100 \leq p^2 / (n^2 + o^2 + p^2) \leq 0.999$; $0.001 \leq q^2 / (n^2 + o^2 + p^2 + q^2) \leq 0.050$; $0.01 \leq q^2m^2 / (q^2m^2 + n^2 + o^2 + p^2) \leq 0.50$; $R^1$ is a hydrogen atom or a carboxyl group; $R^2$ is a hydrogen atom, a methyl group, a carboxyl group or a carboxymethyl group; L is a divalent aliphatic $C_{1\text{-}20}$ hydrocarbon group which may contain a nitrogen atom and/or an oxygen atom, where $R^1$ is a carboxyl group or $R^2$ is a carboxyl group or a carboxymethyl group, L may form a ring with an adjacent hydroxyl group; and M is a monomer unit having a polar group other than a hydroxyl group.

**4.** The copolymer (PA) as claimed in any one of claims 1 to 3, wherein the polymer unit (C) having a polar group other than a hydroxyl group is a polymer unit (CA) having an ionic group.

**5.** The copolymer as claimed in claim 4, wherein the polymer unit (CA) having an ionic group is an anionic group.

**6.** The copolymer as claimed in claim 4, wherein the polymer unit (CA) having an ionic group is a cationic group.

**7.** The copolymer as claimed in claim 5, wherein the monomer unit (M) having a polar group is represented by any one of the following general formulae (3), (4), and (5).

[Chem. 3]

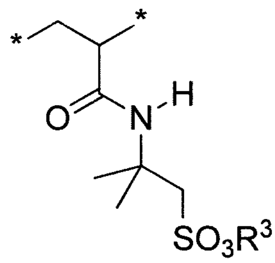

(3)

wherein $R^3$ is a hydrogen atom or an alkali metal atom,

[Chem. 4]

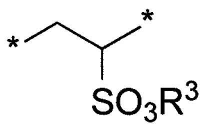

(4)

wherein $R^3$ has the same meaning as defined above, and [Chem. 5]

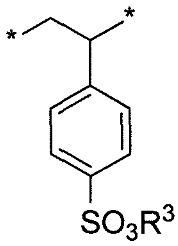

(5)

wherein $R^3$ has the same meaning as defined above.

**8.** The copolymer as claimed in any one of claims 1 to 7, wherein the copolymer (P) has an acetal-modified site introduced by monoaldehyde treatment or a crosslinked site introduced by dialdehyde treatment.

**9.** A method for producing the copolymer (P) recited in any one of claims 1 to 7 comprising:

providing a copolymer (P') including a vinyl alcohol polymer unit (A') and a polymer unit (C) having a polar group other than a hydroxyl group, and
heat-treating the copolymer (P') under an acidic condition to form a polyene structure by dehydration so as to introduce a vinylene monomer unit (B).

**10.** An ion-exchange membrane containing as a main component a copolymer (PA) recited in any one of claims 4 to 6.

**11.** The ion-exchange membrane as claimed in claim 10, wherein the copolymer (PA) has a crosslinked structure.

**12.** The ion-exchange membrane as claimed in claim 10 or 11, wherein the ion exchange membrane comprises a reinforcing material.

**13.** The ion-exchange membrane as claimed in claim 12, wherein the reinforcing material is a support having a continuous structure selected from a porous membrane, a mesh, or a nonwoven fabric.

**14.** The ion-exchange membrane as claimed in claim 12, wherein the nonwoven fabric is a wet-laid nonwoven fabric of polyvinyl alcohol cut fibers.

**15.** A method for producing an ion-exchange membrane comprising:

providing a membrane-shaped body that includes, as a main component, a copolymer (P") including a vinyl alcohol polymer unit (A') and a polymer unit (CA) having an ionic group, and
heat-treating the membrane-shaped body including the copolymer (P") under an acidic condition to introduce a polyene structure by dehydration so as to obtain a copolymer (PA) comprising, as structural units, a vinyl alcohol monomer unit (A), a vinylene monomer unit (B), and a polymer unit (CA) having an ionic group.

Fig. 1

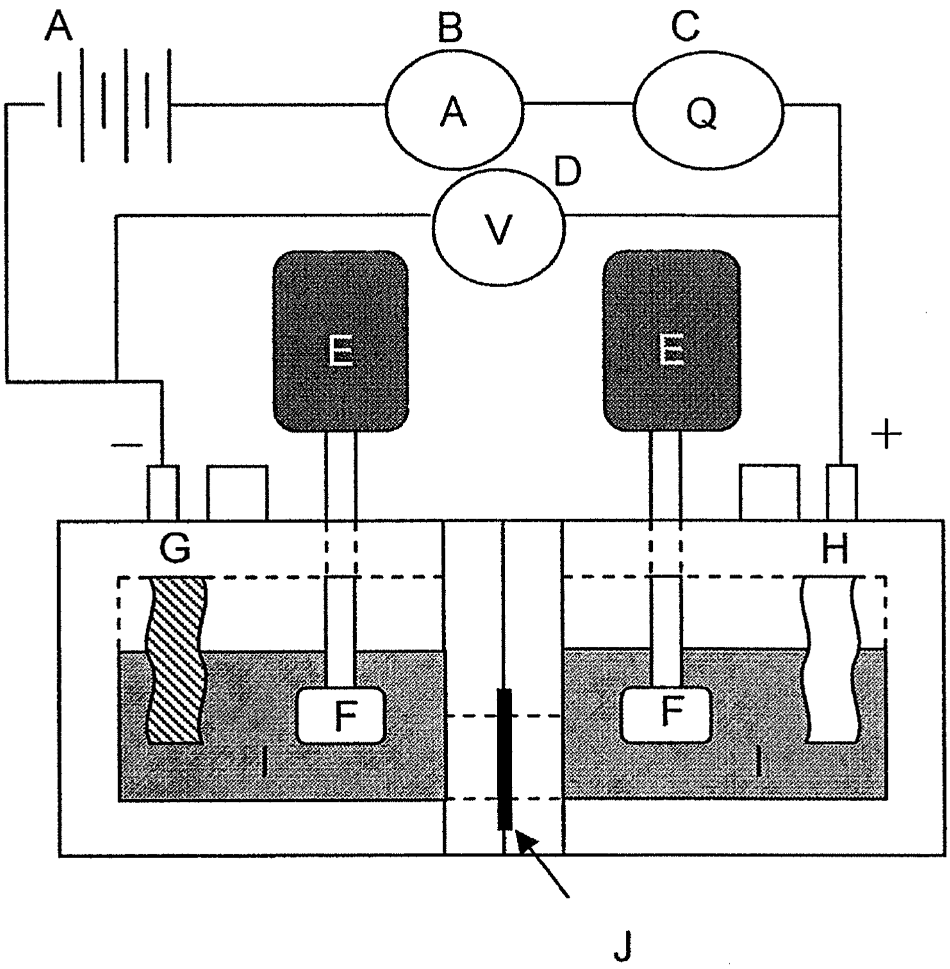

Fig. 2

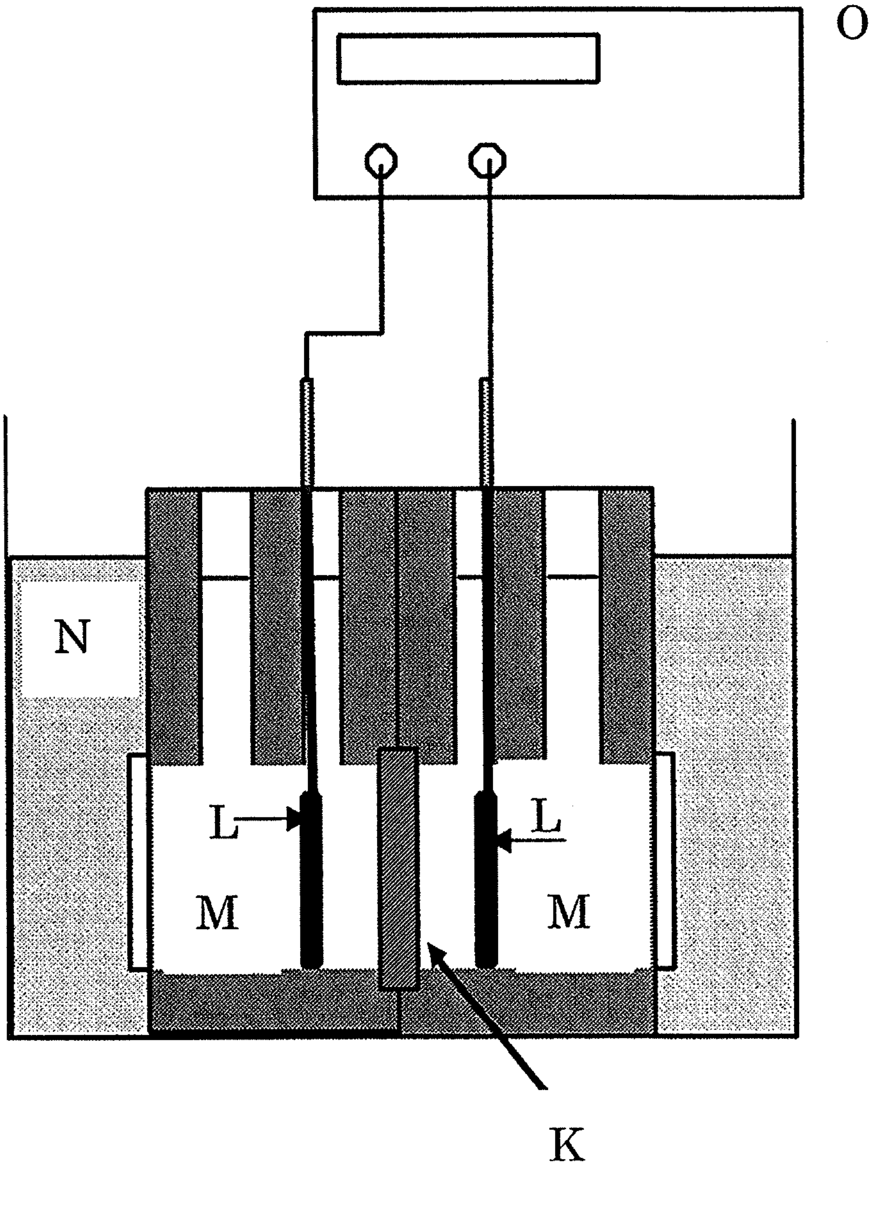

## INTERNATIONAL SEARCH REPORT

International application No.
PCT/JP2014/072503

A. CLASSIFICATION OF SUBJECT MATTER
*C08F8/00*(2006.01)i, *C08J5/18*(2006.01)i

According to International Patent Classification (IPC) or to both national classification and IPC

B. FIELDS SEARCHED

Minimum documentation searched (classification system followed by classification symbols)
C08F8/00-8/50, C08J5/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
JSTPlus/JMEDPlus/JST7580(JDreamIII), Thomson Innovation

C. DOCUMENTS CONSIDERED TO BE RELEVANT

| Category* | Citation of document, with indication, where appropriate, of the relevant passages | Relevant to claim No. |
|---|---|---|
| X | WO 2008/90774 A1 (Kuraray Co., Ltd.), 31 July 2008 (31.07.2008), claims 1 to 10; paragraphs [0001], [0007], [0009], [0014] to [0016], [0041], [0046], [0050], [0058] to [0062], [0064]; examples & JP 4776683 B & US 2010/0098997 A1 & EP 2110875 A1 & CN 101589496 A & KR 10-2009-0112674 A | 1-15 |
| A | JP 59-189113 A (Kuraray Co., Ltd.), 26 October 1984 (26.10.1984), entire text (Family: none) | 1-15 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 September, 2014 (12.09.14) | 22 September, 2014 (22.09.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/072503

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-174726 A (Kuraray Co., Ltd.),<br>21 June 2002 (21.06.2002),<br>entire text<br>(Family: none) | 1-15 |
| A | JP 10-45847 A (Kuraray Co., Ltd.),<br>17 February 1998 (17.02.1998),<br>entire text<br>(Family: none) | 1-15 |
| A | JP 2005-258452 A (Kuraray Co., Ltd.),<br>22 September 2005 (22.09.2005),<br>entire text<br>& JP 10-319236 A & US 6337369 B1<br>& EP 926515 A1 & EP 1764383 A2<br>& WO 1998/041887 A1 & DE 69835729 D<br>& DE 69835729 T & KR 10-2000-0010959 A<br>& CN 1220735 A | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013180429 A
- JP 2014041935 A
- JP 2008266443 A
- JP 2008285665 A
- JP 2005078895 A
- JP 4776683 B
- WO 2010110333 A1
- JP 3763904 B
- JP 438992 A
- JP 62215011 A
- JP 1229805 A
- JP 59187003 A